# EUROPÄISCHE PATENTSCHRIFT

(11) **EP 3 149 014 B1**
(45) Veröffentlichungstag und Bekanntmachung des Hinweises auf die Patenterteilung: **30.01.2019**
(21) Anmeldenummer: 15729105.5
(22) Anmeldetag: 02.06.2015
(51) Int. Cl.: C07F 9/38

(54) **VERFAHREN ZUR HERSTELLUNG KRISTALLINER DTPMP**
PROCESS FOR PRODUCING CRYSTALLINE DTPMP
PROCÉDÉ POUR FABRIQUER DU DTPMP CRISTALLIN

(30) Priorität: 02.06.2014 DE 102014210377
(43) Veröffentlichungstag der Anmeldung: 05.04.2017
(73) Patentinhaber: Zschimmer & Schwarz Mohsdorf GmbH & Co. KG, 09217 Burgstädt (DE)
(72) Erfinder: KREHER, Thomas, 09306 Gröblitz (DE); LIEBSCH, Stephan, 04600 Altenburg (DE); RUDOLPH, Carsten, 09669 Frankenberg (DE)
(74) Vertreter: Kailuweit & Uhlemann Patentanwälte Partnerschaft mbB
(86) Internationale Anmeldenummer: PCT/EP2015/062252
(87) Internationale Veröffentlichungsnummer: WO 2015/185548

(56) Entgegenhaltungen:
- EP-A1- 0 225 409
- EP-A2- 0 411 941
- EP-B1- 0 724 576
- GB-A- 2 138 424
- JP-A- 2002 105 089
- RU-C1- 2 434 875

## Beschreibung

Die vorliegende Erfindung betrifft Kristallisate der reinen Aminoalkylenphosphonsäure DTPMP in drei Kristallmodifikationen und ein Verfahren zur Feststoffgewinnung kristalliner DTPMP durch eine bevorzugt einstufige Kristallisation aus einem wässrigen Produktgemisch, enthaltend DTPMP.

Aminoalkylenphosphonsäuren werden seit vielen Jahrzehnten in der Größenordnung von ca. 100.000 Tonnen Aktivstoffmolekül pro Jahr weltweit eingesetzt. Haupteinsatzgebiete sind hierbei die Wasch- und Reinigungsmittelindustrie sowie die unterschiedlichsten Wasserbehandlungstechnologien bei denen Aminoalkylenphosphonsäuren und ihre Salze als multifunktionale Additive fungieren.

Herstellungsbedingt werden Aminoalkylenphosphonsäuren zum überwiegenden Teil als wässrige Lösungen vermarktet. Die für spezielle Anwendungen, wie beispielsweise den Einsatz in pulverförmigen, stückigen oder pastösen Formulierungen, notwendigen festen Aminoalkylenphosphonsäuren müssen aus den wässrigen Syntheselösungen in zusätzlichen Verfahrensschritten hergestellt werden. Aus der Reihe der Aminoalkylenphosphonsäuren sind dabei Flüssigprodukte, basierend auf der nur schlecht aus wässrigen Lösungen kristallisierenden Diethylentriamin-penta(methylenphosphonsäure) (DTPMP) mit einem hohen Anteil vertreten.

Grund hierfür ist die sehr gute Komplexierkraft für eine Vielzahl von Metallionen, eine exzellente Stabilisierung von Wasserhärte, verbunden mit einem ausgeprägten Dispergiervermögen von Feststoffpartikeln und dem Schutz metallischer Oberflächen vor Korrosion. Dies führt zu den unterschiedlichsten Einsatzfeldern der DTPMP, wie beispielsweise in Wasch- und Reinigungsprozessen sowie als Chelatbildner bei der Stabilisierung von Peroxidbleichen und als Zusatzstoff zur Aufbereitung von Trinkwasser, industrieller Brauchwässer sowie der Ölfeldwasserbehandlung.

Es besteht daher ein großer Bedarf an DTPMP Produkten, welche vorzugsweise frei von Begleitionen und Verfärbungen sind, und die nicht nur als wässrige Lösungen, sondern auch als Feststoffe angeboten werden können, um so dem Formulierer eine Vielzahl neuer Einsatzmöglichkeiten zu eröffnen.

Verfahren zur Herstellung von DTPMP sind bekannt und z.B. in DE 3128755 A1 oder EP 1 838 720 B1 detailliert offenbart. Jedoch weisen die zum jetzigen Zeitpunkt kommerziell verfügbaren Produkte auf Basis von DTPMP lediglich unzureichende Reinheiten auf und liegen nur als wässrige Produkte vor.

Kommerziell ist DTPMP ausschließlich in wässrigen Lösungen erhältlich. Die derzeit am Markt angebotenen wässrigen Produkte sind allerdings nicht frei von Begleitionen und weisen signifikante Mengen an Verunreinigungen auf, sodass sie stets eine bräunliche Färbung und zudem einen deutlich arteigenen Geruch zeigen. Dies schränkt die praktische Einsetzbarkeit der anwendungstechnisch außerordentlich flexiblen Aminoalkylenphosphonsäure ein.

Hierzu ist beispielsweise aus US 4,477,390 A ein ausschließlich wässriges DTPMP-Konzentrat bekannt, das bei Raumtemperatur lagerstabil ist, wobei die DTPMP lediglich im Gemisch mit ihren mindersubstituierten Vertretern (D3A und D4A) und durch den Zusatz von hohen Konzentrationen von wenigstens 18 bis 22 Gewichtsprozent an nicht oxidierenden Mineralsäuren (bspw. HCl) in Lösung gehalten werden soll.

Es findet sich in der Literatur eine ganze Reihe von Ansätzen die Produktqualitäten wässriger Lösungen von Aminoalkylenphosphonsäuren zu verbessern bzw. die Produktvielfalt zu erhöhen. Neben den unterschiedlichsten Varianten zur Syntheseoptimierung sind auch Ansätze zur nachträglichen Reinigung sowie zur technischen Produktion von Feststoffen bekannt.

JP 2002 105089 A offenbart ein Verfahren zur Reinigung von Aminophosphonsäuren, wobei eine wässrige Lösung der verunreinigten Aminophosphonsäure mit einem polaren organischen Lösungsmittel gemixt wird, die Löslichkeit der Säure in der Mischung herabsetzt und deren Fällung initiiert. Nachteilig werden bei einer Fällung durch Herabsetzen der Löslichkeit, durch Zugabe von beispielsweise Methanol, alle in der Lösungsmittelmischung unlöslichen Stoffe ausgefällt.

Ähnlich ist die RU 2 434 875 C1, welche die Herstellung von Aminoalkylphosphonsäuren durch Umsetzung von Ammoniumverbindungen mit Formaldehyd und Phosphonsäuren beschreibt. Der am Ende der Reaktion eingeengten wässrigen Reaktionslösung werden größere Mengen Methanol zugegeben, um eine Ausfällung des Produktes zu initiieren. Dabei erhält man jedoch keine reine und kristalline Aminoalkylenphosphonsäure, vielmehr handelt es sich bei dem Fällungsprodukt um eine amorphe Mischung sämtlicher, in dem Lösungsmittelgemisch unlöslicher Stoffe.

EP 0 225 409 A1 offenbart die Herstellung von radiomarkierten Komplexen von Aminoalkylphosphonsäuren, u.a. DTPMP. Die freie Säure wird zunächst in wässriger Lösung aus der Reaktion von Phosphoriger Säure, Amin und Formaldehyd durch Kochen unter Rückfluss generiert. Während des Abkühlens fällt das Produkt aus. Nachteilig entsteht auch dabei ein Rohprodukt, das neben der gewünschten Aminoalkylenphosphonsäure auch noch mindersubstituierte Nebenprodukte und Verunreinigungen enthält.

EP 0411941 B1 offenbart hierzu ein chemisches Stofftrennverfahren zur Reinigung von Aminomethylenphosphonsäuren unter Ausnutzung einer Säure-Base-Reaktion. Nach dem Lösen der jeweiligen Aminoalkylenphosphonsäure in einer wässrigen Base erfolgt die Rekristallisation der Aminoalkylenphosphonsäure durch schrittweise Zugabe einer Säure. Im Anschluss wird das erhaltene Präzipitat filtriert und mit Wasser gewaschen. In EP 0411941 B1 ist ausdrücklich erwähnt, dass sich das beanspruchte Verfahren nicht für die Reinigung von DTPMP eignet.

EP 724576 B1 offenbart ein Verfahren zur nicht-alkalischen Reinigung von Aminoalkylenphosphonsäuren. Dabei werden die Rohprodukte nach dem Aufschlämmen mit Wasser bei einem neutralen oder sauren pH-Wert bis zum Rückfluss erhitzt. Im Anschluss an die thermische Behandlung wird das Präzipitat filtriert und mit Wasser gewaschen. Das beschriebene Verfahren eignet sich beispielsweise für die Reinigung von EDTMP und DOTMP. Da die Löslichkeit von DTPMP bei erhöhten Temperaturen zwischen 60 bis 70°C stark zunimmt, eignet sich das Verfahren nicht dazu, DTPMP in Wasser zu suspendieren, um sie unter Rückflussbedingungen zu isolieren. Auch eine Rekristallisation durch Abkühlung der Lösung führt daher nicht zu industriell verwertbaren Mengen.

Typische, kommerziell verfügbare pH-saure DTPMP- Produkte sind ausschließlich als Flüssigprodukte erhältlich, da sich pH-saure DTPMP-Feststoffe aufgrund ihrer synthesebedingt enthaltenen Verunreinigungen nicht lagerstabil ohne Zuhilfenahme von Stabilisatoren fertigen ließen. Eine Stabilisierung von pH-sauren DTPMP-Flüssigprodukten gegen unkontrollierte Ausfällungen ist unumgänglich. Dies erfolgt entweder durch partielle Anneutralisation, mindestens das Trinatriumsalz oder durch Zugabe von Fremdsäuren (bspw. mindestens 10 Ma.-% HCl).

Granulierte Natriumsalze der DTPMP sind herstellungsbedingt mit Zusatzstoffen versetzt, so dass der Anteil an DTPMP in diesen Feststoffen deutlich kleiner als 40 Ma.-% ist.

Herkömmliche Trocknungsverfahren wie Sprühtrocknung oder Granulation führen entweder zu extrem hygroskopischen Pulvern oder verwenden Technologien bei denen der Wirkstoffgehalt der schlecht trocknenden Aminoalkylenphosphonsäure DTPMP durch Zusatzstoffe herabgesetzt ist, was wiederum die Einsatzbreite des Trockenstoffes beschränkt. Damit konnten sich feste DTPMP Produkte bisher nicht am Markt durchsetzen, wie dies beispielsweise bei den weit verbreiteten pulver- und granulatförmigen Produkten der Hydroxybisphosphonsäure HEDP der Fall ist.

Da die vorstehend beschriebenen Verfahren zur Reinigung von stark mit Begleitstoffen und Verunreinigungen beladenen Aminoalkylenphosphonsäuren aus technischen, wirtschaftlichen oder ökologischen Gründen nicht für die Reinigung und Feststoffgewinnung von DTPMP geeignet sind, besteht daher ein großer Bedarf ein einem derartigen Verfahren.

Es ist deshalb Aufgabe der Erfindung, ein Verfahren zur Reinigung und Feststoffgewinnung der reinen Aminoalkylenphosphonsäure DTPMP bereitzustellen.

Erfindungsgemäß wird die Aufgabe durch ein Verfahren zur Feststoffgewinnung kristalliner DTPMP als reine Säure der allgemeinen Formel (**I**) aus einem wässrigen Rohprodukt gelöst, enthaltend DTPMP und einem pH-Wert kleiner 4, vorzugsweise kleiner 3 (im folgenden wässriges Rohprodukt genannt) mit den folgenden Schritten:
a. Einbringen von Impfkeimen, enthaltend DTPMP, in ein wässriges Rohprodukt, enthaltend DTPMP mit einem Gesamtanteil im Bereich von 10 bis 65 Ma.-%, bis zu einer Trübedichte im Bereich von 1 bis 25%,
b. Eintrag kinetischer Energie in das wässrige Rohprodukt bspw. durch intensives Rühren und/oder Schütteln und/oder den Eintrag von Schwingungen, wobei ausgehend von den Impfkristallen eine Kristallschicht aufwächst, so dass sich ein Kristallisat der allgemeinen Formel (**I**), enthaltend DTPMP als reine Säure mit einem Gesamtgehalt von mindestens 75 Ma.-% bildet und ausfällt,
c. Abtrennung des gebildeten Kristallisates von dem wässrigen Rohprodukt durch Sedimentation und/oder Filtration,
wobei das Kristallisat der reinen Säure DTPMP die allgemeine Formel (I): 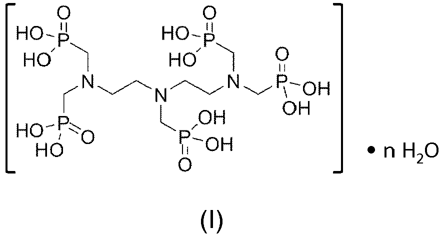 aufweist, wobei n eine Zahl zwischen 0 und 2 ist.

Das erfindungsgemäße Verfahren hat den Vorteil, dass DTPMP als eine Aminoalkylenphosphonsäure die eine hohe Übersättigungsneigung und gleichzeitig geringe Keimbildungsrate und Kristallwachstumsgeschwindigkeit besitzt und daher nur schlecht aus wässrigen Lösungen kristallisiert werden kann, über einen bevorzugt quasikontinuierlichen Prozess als festes Endprodukt in Form eines Kristallisates erhalten wird. Vorteilhaft werden durch das Verfahren, vorzugsweise während der Kristallisation von DTPMP unerwünschte Verunreinigungen abgetrennt, sodass das Kristallisat einen hohen Reinheitsgrad aufweist. Ganz besonders vorteilhaft weisen Kristallisate, enthaltend DTPMP, die über das erfindungsgemäße Verfahren gewonnen werden, gegenüber mittels herkömmlicher Methoden erhaltenen Feststoffen, enthaltend DTPMP, eine wesentlich geringere Hygroskopie auf.

Ganz besonders vorteilhaft wird die Aminoalkylenphosphonsäure als Feststoff in Form eines Kristallisates durch vollständige Kristallisation ohne anorganische bzw. organische Verunreinigungen, wie bspw. zytotoxische Bleiverunreinigungen und synthesebedingte Nebenprodukte und nichtumgesetzte Rohstoffe, erhalten.

Weiterhin vorteilhaft werden durch das Verfahren hohe Reinheitsgrade erzielt, die den Anforderungen wie geringe Toxizität, keine Korrosivität, entfallende Farbigkeit durch Verunreinigungen für Anwendungen in der Wasch- und Reinigungsmittelindustrie, sowie den hohen Reinheitsansprüchen an Chemikalien für die Elektronikindustrie sowie der Metallbehandlung genügen.

Erfreulicher Weise hat sich zudem gezeigt, dass das erfindungsgemäße Verfahren wirtschaftlicher und umweltfreundlicher ist, als herkömmliche Methoden zur Feststoffgewinnung von Aminoalkylenphosphonsäuren, da vorteilhaft auf die Verwendung anderer Chemikalien oder teurer nachgeschalteter Verfahrensschritte verzichtet werden kann.

Der vorliegenden Erfindung liegt dabei die jüngst gewonnene Erkenntnis zugrunde, dass die Löslichkeit und die Neigung zur Übersättigung der Aminoalkylenphosphonsäure DTPMP mit zunehmendem Grad der Aufreinigung (d.h. mit sinkendem Anteil an Verunreinigungen) sinken.

Dem Fachmann ist bereits aus US 4,477,390 A (Monsanto Company, 16.10.1984; Spalte 5 und 6, Beispiele 1 bis 34) bekannt, dass durch den Zusatz hoher Konzentrationen an Begleitionen (bspw. HCl, H₂SO₄) die Löslichkeit der DTPMP erhöht ist. Nach der Lehre der Patentschrift sollte die Konzentration zugesetzter HCl zumindest 15 Gewichtsprozente betragen, um ein wässriges lagerstabiles (d.h. ohne Eintrag von kinetischer Energie) DTPMP-Konzentrat bereitzustellen, das bis zu 40 Gewichtsprozent Phosphonat enthält. Durch die kombinierte Verwendung mehrerer Begleitionen, bspw. HCl und H₂SO₄ lassen sich sogar flüssige DTPMP-Produkte mit bis zu 60% DTPMP in Lösung erhalten.

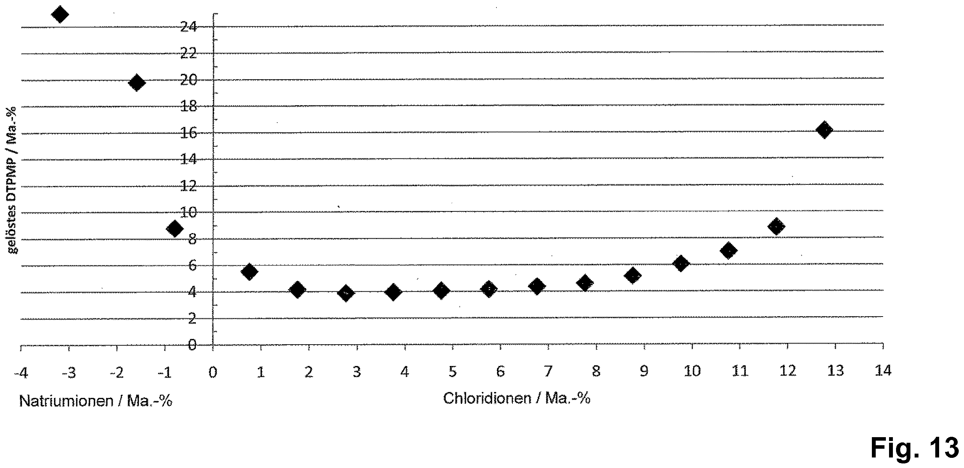

Synthesebedingt weist das wässrige Rohprodukt der DTPMP bspw. nach dessen Herstellung mit HCl als Säurekatalysator (bis zu 18 Ma.-%) üblicherweise Restmengen an Chloridionen auf. Überraschend wurde nun allerdings gefunden, dass Chloridionen bei relativ geringen Konzentrationen im Bereich von 1 bis 4 Ma.-% zu einer weiteren Löslichkeitserniedrigung und/oder Reduzierung der Übersättigungsneigung der DTPMP führen (*vgl.* Figur 13).

Auch Suspensionen (im Folgenden auch Slurry genannt, d.h. ein heterogenes Gemisch aus Feststoffpartikeln, enthaltend DTPMP, und dem wässrigen Rohprodukt) aus Herstellungsprozessen mit zu HCl alternativen Säurekatalysatoren, wie bspw. Methansulfonsäure (bis zu 25%) oder Schwefelsäure (bis zu 25%), zeigen ein vergleichbares Löslichkeitsverhalten.

Es wird vermutet, dass bei äquimolaren Stoffmengenverhältnissen in Lösung eine Salzbildung über mindestens ein Stickstoffatom der Aminoalkylenphosphonsäure DTPMP (bspw. DTPMP-Hydrochlorid DTPMP*HCl) erfolgt, wodurch die sterische Beweglichkeit der DTPMP-Moleküle eingeschränkt wird, so dass die Löslichkeit herabgesetzt wird. Umso überraschender ist es, dass trotzdem die freie Aminoalkylenphosphonsäure kristallisiert und nicht deren Salz DTPMP*HCl. Der Reinigungseffekt wird demnach vorteilhaft nicht behindert. Besonders vorteilhaft kann dieses Verhalten zur Erhöhung der Ausbeute an Kristallisat genutzt werden, indem im DTPMP-Slurry bewusst Restmengen an Mineralsäure (bspw. 1 bis 5 Ma.-% Chloridionen) belassen oder aber hinzugefügt werden, welches den Chloridgehalten marktüblicher DTPMP-Produkte (synthesebedingten Stoffmengenverhältnis eines typischen DTPMP-Slurries) vergleichbar ist.

Definitionsgemäß ist unter der Löslichkeit eines Stoffes die maximale Menge eines Stoffes zu verstehen, die sich in einem Lösungsmittel homogen verteilt, ohne dass der Stoff in Folge einer Kristallisation als feste Phase (Feststoff) vorliegt. Die Löslichkeit gibt an, wie viel Gramm (g) dieses Stoffes in seiner reinen Form in 100 g Lösungsmittel gelöst werden können.

Die Aminoalkylenphosphonsäure DTPMP neigt beim langsamen Abkühlen einer gesättigten Lösung allerdings dazu, dass der Kristallisationsbeginn, der zur Bildung einer festen Phase von DTPMP führt, leicht übergangen werden kann und somit die Kristallisation nicht in dem zur Wahrung des thermodynamischen Gleichgewichtes notwendigen Umfang sowie zeitlich verzögert stattfindet. Die Kristallisationsgeschwindigkeit und Keimbildungsrate von DTPMP sind sehr gering, weshalb selbst beim Einbringen einer kleinen Menge an Feststoffpartikeln (0,1-2,0 Ma.-%), enthaltend DTPMP, in eine gesättigte Lösung (d.h. Impfung) und anschließender Inkubation (d.h. ohne Eintrag von kinetischer Energie) auch nach Tagen, Wochen oder Monaten keine nennenswerten Mengen der DTPMP als Feststoff ausfallen. Dabei werden bei den zugesetzten Feststoffpartikeln lediglich die aktiven Stellen abgesättigt und der weitere Kristallisationsprozess kommt zum Erliegen.

Definitionsgemäß wird eine Überschreitung der maximalen löslichen Menge eines Stoffes, die nicht zu einer Kristallisation bis zum Erreichen des Gleichgewichtszustandes führt, als Übersättigung bezeichnet. Eine übersättigte Lösung befindet sich demnach in einem metastabilen Zustand, wobei keine oder nur eine geringe Kristallisation stattfindet.

Besonders vorteilhaft werden durch das erfindungsgemäße Verfahren unerwünschte Begleitstoffe und Verunreinigungen von der Aminoalkylenphosphonsäure DTPMP abgetrennt, weil sie entweder von vornherein ungelöst bleiben und somit bereits vor dem erfindungsgemäßen Verfahren leicht von einem wässrigen Rohprodukt abgetrennt werden können oder weil sie, wenn sie ebenfalls in Lösung gehen, aufgrund ihrer geringen Konzentration in dem wässrigen Rohprodukt verbleiben, wenn das Kristallisat bereits ausgefallen ist.

Weiterbildungen, Vorteile und Anwendungsmöglichkeiten der Erfindung ergeben sich auch aus der nachfolgenden Beschreibung. Dabei bilden alle beschriebenen Merkmale für sich oder in beliebiger Kombination den Gegenstand der Erfindung, unabhängig von ihrer Zusammenfassung in den Ansprüchen oder deren Rückbeziehung.

Ausgangspunkt des erfindungsgemäßen Verfahrens ist ein Rohprodukt, enthaltend mindestens DTPMP das in Form als Trockensubstanz, in gelöster Form und/oder als Suspension vorzugsweise in Wasser vorliegt. Vorzugsweise enthält das Rohprodukt DTPMP mit einer Konzentration von mindestens 5 Ma.-%, bevorzugt zwischen 10 bis 90 Ma.-%, besonders bevorzugt zwischen 20 bis 80 Ma.-%.

Die Angaben in Masseprozent (Ma.-%) leiten sich dabei aus dem Masseanteil w des jeweiligen Bestandteils in der (wässrigen) Lösung her und ergeben sich als das Hundertfache dieses Werts (m%=100**w*). Der Masseanteil des jeweiligen Bestandteils bestimmt sich dabei als Anteil der Masse dieses Bestandteils an der Masse der Gesamtlösung nach dem Mischen, also den Massen aller in dem Lösungsmittel gelösten Bestandteile plus der Masse des Lösungsmittels selbst.

Der Begriff "wässriges Rohprodukt" bedeutet im Sinne der Erfindung, dass das zu reinigende Rohprodukt zu Beginn des erfindungsgemäßen Reinigungsverfahrens bevorzugt in Wasser oder einer wasserhaltigen Lösung homogen gelöst und/oder suspendiert ist. Dabei kann das wässrige Rohprodukt neben DTPMP Verunreinigungen in Form von Nebenprodukten und/oder nicht umgesetzten Edukten enthalten. Als Nebenprodukte liegen anorganische Nebenprodukte wie z.B. Phosphate und organische Nebenprodukte vor. Nicht umgesetzte Edukte sind bspw. Chloride und Phosphorige Säure (H₃PO₃).

Die organischen Nebenprodukte können in mindersubstituierte Produkte und Kondensationsprodukte unterteilt werden. Mindersubstituierte Produkte entstehen bei der unvollständigen Umsetzung des primären bzw. sekundären Amins (z.B. mit Formaldehyd und der Phosphorigen Säure H₃PO₃), wobei einige N-H-Funktionalitäten erhalten bleiben oder aber N-CH₃-Funktionalitäten gebildet werden.

Kondensationsprodukte können zwischen H₃PO₃ und dem Formaldehyd entstehen und sind z.B. Hydroxymethanphosphonsäure.

Außerdem können Edukte wie Formaldehyd oder H₃PO₃ mit einer Konzentration zwischen 0 bis 15 Ma.-% enthalten sein. Ebenfalls enthaltene Phosphorsäure H₃PO₄ entsteht durch Oxydation der Phosphorigen Säure H₃PO₃ als Nebenreaktion. Synthesebedingt enthält ein wässriges Rohprodukt Säuren, bspw. HCl, H₂SO₄, H₃PO₃, H₃PO₄ und/oder Methansulfonsäure in einer Gesamtkonzentration bezogen auf DTPMP zwischen 0 bis 30 Ma.-%.

In einer erfindungsgemäßen Ausgestaltung enthält das wässrige Rohprodukt neben DTPMP Verunreinigung in Form von Nebenprodukten und/oder nicht umgesetzten Edukten.

Das Rohprodukt kann mindersubstituierte DTPMP-Derivate mit einer Konzentration von 0 bis 15, bevorzugt zwischen 0,1 bis 10 Ma.-% und/oder andere Nebenprodukte (z.B. Phosphorsäure, Hydroxymethanphosphonsäure, u. a.) enthalten, die bei einem unvollständigen Stoffumsatz der chemischen Reaktion gebildet wurden. Im Falle einer unvollständigen Synthese kann das Rohprodukt zudem Reste nicht umgesetzter Ausgangsstoffe (z.B. Formaldehyd, Salzsäure, phosphorige Säure, u.a.) mit einer Konzentration von 0 bis 15 Ma.-%, bevorzugt 0,1 bis 10 Ma.-% enthalten.

Der Vorteil des erfindungsgemäßen Verfahrens liegt dabei in der selektiven Abtrennung der DTPMP von den genannten Verunreinigungen. Zwar lassen sich die anorganischen Nebenprodukte durch bekannte Methoden der Ausfällung mit Lösungsmitteln abtrennen, aber die molekular ähnlich aufgebauten und vergleichbar löslichen organischen Nebenprodukte lassen sich damit nicht vollständig abtrennen.

Bevorzugt enthält das wässrige Rohprodukt DTPMP mit einem Gesamtanteil im Bereich von 10 und 65 Ma.-%, besonders bevorzugt 15 und 65 Ma.-%, ganz besonders bevorzugt im Bereich von 20 und 60 Ma.-%.

Der Massenanteil eines Bestandteils (z.B. einer Aminoalkylenphosphonsäure) in Lösung lässt sich auf verschiedenen, dem Fachmann bekannten Wegen bestimmen, beispielsweise durch gravimetrische Verfahren, durch komplexometrische Titration oder durch Säure-Base-Titration.

Ein zu reinigendes wässriges Rohprodukt lässt sich in geeigneter Weise bevorzugt analog zu den Arbeiten von Moedritzer und Irani (J. Org. Chem. 1966, 31, 1603-1607) bereitstellen.

Dabei werden in Gegenwart einer starken Säure (z.B. Salzsäure (HCl), Schwefelsäure) vorzugsweise primäre Amine (z.B. Ammoniak, Aminoethan, 1,2-Diaminoethan, Aminoethanol etc.), Phosphorige Säure (H₃PO₃) und Formaldehyd, unter Beachtung der für einen möglichst vollständigen Umsatz aller N-H-Funktionalitäten notwendigen stöchiometrischen Verhältnisse zu Phosphonsäuren umgesetzt. Alternativ zum Einsatz von H₃PO₃ und HCl kann auch mit Phosphortrichlorid und Wasser gearbeitet werden. Bei einer so durchgeführten Phosphonomethylierung wird die vollständig substituierte Aminoalkylenphosphonsäure als Hauptprodukt üblicherweise mit einer Reinheit von 75 - 85% erhalten.

Alternativ kann ein wässriges Rohprodukt, enthaltend DTPMP, beispielsweise auch über eine nukleophile Substitutionsreaktion basierend auf einer Michaelis-Arbuzov Reaktion (Berichte 1898, 31, 1048) mit nachfolgender saurer Hydrolyse erhalten werden.

Bevorzugt können als wässriges Rohprodukt auch handelsübliche wässrige Lösungen, enthaltend DTPMP mit einem Gesamtgehalt zwischen 20 und 60 Ma.-% dienen, die beispielsweise unter den Handelsbezeichnungen wie z. B. CUBLEN® DNC 450, CUBLEN® D5000 der Fa. Zschimmer & Schwarz) aber auch teilneutralisierte und neutralisierte handelsübliche Produkte in Form als Natriumsalz, wie bspw. Cublen D 5113 (pH 2-3) Cublen D 4217 (pH 6-8) vertrieben werden.

Alternativ bevorzugt kann ein wasserhaltiges Rohprodukt durch das Lösen und/oder Suspendieren eines Feststoffs, enthaltend DTPMP in Wasser oder einer wasserhaltigen Lösung bereitgestellt werden. Bevorzugt wird der Feststoff unter Erwärmen auf eine Temperatur von mehr als 30°C, besonders bevorzugt auf eine Temperatur zwischen 30 und 100°C, ganz besonders bevorzugt zwischen 35 und 60°C in einem oder mehreren wässrigen Lösungsmitteln gelöst und/oder suspendiert.

Vorteilhaft bleibt ein Anteil an unerwünschten Verunreinigungen während des Lösungsvorgangs der DTPMP ungelöst und kann so bereits vor dem Kristallisationsprozess von dem wasserhaltigen Rohprodukt durch Filtration und/oder Sedimentation abgetrennt werden.

Bevorzugt weist ein wässriges Rohprodukt einen pH-Wert kleiner 5, bevorzugt kleiner 4, ganz besonders bevorzugt kleiner 3 auf. Optional kann der pH-Bereich des wasserhaltigen Rohprodukts durch die Zugabe einer Säure (z.B. Halogenwasserstoffsäure, H₃PO₄) und/oder einer Base (z.B. Alkali-, Erdalkalilauge) eingestellt werden. Methoden zur Ermittlung des pH-Werts sind dem Fachmann bestens bekannt.

Der Massenanteil eines Bestandteils (z.B. einer Aminoalkylenphosphonsäure) in Lösung lässt sich auf verschiedenen, dem Fachmann bekannten, Wegen bestimmen, beispielsweise durch gravimetrische Verfahren, durch komplexometrische Titration oder durch Säure-Base-Titration.

Erfindungsgemäß ist ein Impfkeim ein partikulärer Feststoff, der als Substrat die Kristallisation und das Reifen der Kristallisate induziert und somit als Matrixmaterial für das Anwachsen der Kristallschicht zur Feststoffgewinnung (d.h. Kristallisation), enthaltend DTPMP, dient, sodass das Kristallisat gebildet wird. Impfung bedeutet demnach das Einbringen von Impfkeimen in eine Lösung zur Einleitung der Kristallisation nach Überschreitung der Sättigungskonzentration. Diese Impfkeime bestehen bevorzugt aus arteigenem Kristallisat, also Kristallen oder Bruchstücken von Kristallen welche im Vorfeld unter vergleichbaren Bedingungen gewonnen wurden.

Vorzugsweise ist ein Impfkeim ein arteigener kristalliner Feststoff, der DTPMP mit einem Massenanteil bezogen auf den Impfkeim zwischen 50 und 100 Ma.-%, besonders bevorzugt zwischen 70 und 100 Ma.-%, ganz besonders bevorzugt zwischen 75 und 95 Ma.-% enthält. Ein Massenanteil einer Komponente von 100 Ma.-% bedeutet im Sinne der Erfindung, dass der Anteil anderer Komponenten unterhalb der Nachweisgrenze liegt. Vorzugsweise ist der Impfkeim arteigen und weist eine hohe spezifische Oberfläche auf. Bevorzugt weisen die Impfkeime eine Kantenlänge im Bereich von 0,1 bis 100 *µ*m, besonders bevorzugt 0,5 bis 50 *µ*m auf.

Es kann dabei von besonderer Wichtigkeit sein, dass die im Vorkristallisationsschritt erzeugten Keimkristalle in einer gewünschten stabilen arteigenen Kristallmodifikation vorliegen. Für das erfindungsgemäße Verfahren sind dies die sogenannten *α-, β*- und *γ*-Kristallmodifikationen der reinen DTPMP.

Durch das Einbringen von Impfkeimen in das wässrige Rohprodukt wird eine Suspension (auch Slurry, d.h. ein heterogenes Gemisch aus Feststoffpartikeln, enthaltend DTPMP, und dem wässrigen Rohprodukt) gebildet. Das wässrige Rohprodukt dient dabei als Trägerflüssigkeit in der die Feststoffpartikel grobdispers vorliegen und daher zur Sedimentation neigen.

Durch die hohe spezifische Oberfläche der zugesetzten Feststoffpartikel wird vorteilhaft die Kristallisation beschleunigt. Kristallisation bedeutet hierein das Anwachsen von Ionen, Molekülen oder Ionen- und Molekülaggregaten, enthaltend DTPMP, aus der wässrigen Lösung an die Kontaktfläche des Impfkeims und/oder des Kristallisates durch Adsorption.

Durch eine vorgegebene hohe spezifische Oberfläche in Form zugesetzter Feststoffpartikel werden die quasi nicht vorhandene Tendenz zur Eigenkeimbildung von DTPMP und die extrem geringe Kristallisationsgeschwindigkeit umgangen.

Dem Fachmann ist grundsätzlich bekannt, dass er die Kristallisation gängiger Aminoalkylenphosphonsäuren durch den Eintrag geringster Mengen (Trübedichte kleiner 0,5 Ma.-%) an Impfkeimen initiieren kann, wobei bereits bei geringen Mengen ein geordnetes Kristallwachstum bis hin oder bis fast zum Gleichgewichtspunkt, also mit nur sehr geringer verbleibenden Übersättigung, erzielt werden kann. Dem entgegen wurde nun von den Erfindern überraschend gefunden, dass dies für die Aminoalkylenphosphonsäure DTPMP nichtzutreffend ist. Vielmehr bedarf es für die geordnete Kristallisation der DTPMP bis nahe an den jeweiligen Gleichgewichtspunkt wesentlich größerer Impfmengen.

Vorteilhaft lässt sich durch die Menge an eingebrachten Impfkeimen in das wässrige Rohprodukt der Zeitraum bis zum Übergang in den stationären Betriebszustand beschleunigen. Bevorzugt wird das wässrige Rohprodukt mit einer Impfkeimmenge in Form von Impfkeimen, enthaltend DTPMP, bis zu einer Trübedichte zwischen 0,1 bis 25 Ma.-%, besonders bevorzugt zwischen 0,2 bis 20 Ma.-%, ganz besonders bevorzugt zwischen 1 bis 20% kontaktiert.

Nach einer bevorzugten Ausgestaltung der vorliegenden Erfindung haben sich Impfkeimmengen mit einer Trübedichte von 1 bis 25 Ma.-%, besonders bevorzugt zwischen 5 bis 20 Ma.-%, ganz besonders bevorzugt zwischen 10 bis 20% erwiesen.

Im Falle einer Suspension handelt es sich um ein heterogenes Gemisch aus Feststoffpartikeln der Impfkeime und/oder des Kristallisates in Wasser bzw. einer wässrigen Lösung. Das Wasser oder eine wässrige Lösung dienen dabei als Trägerflüssigkeit in der die Feststoffpartikel der Impfkeime und/oder des Kristallisates grobdispers oder feindispers, bevorzugt feindispers vorliegen.

Um zu gewährleisten, dass eine Suspension aus Feststoffpartikeln (d.h. Impfkeime und/oder Kristallisate) in einer Trägerflüssigkeit fließfähig und pumpfähig ist, beträgt die Trübedichte einer Suspension aus Impfkeimen und/oder Kristallisaten in einer wässrigen Lösung bevorzugt maximal 70%, besonders bevorzugt maximal 60%, ganz besonders bevorzugt im Bereich von 20 und 55%. Die Trübedichte ist dabei ein Maß für den Feststoffgehalt in einer Suspension und ist definiert als der Anteil an suspendierten Feststoffpartikeln in kg pro m³ Trägerflüssigkeit (%).

Bevorzugt weist das wässrige Rohprodukt zur Feststoffgewinnung (Ausfällen des Kristallisates) eine Temperatur im Bereich von 0 bis 85°C, besonders bevorzugt von 15 bis 80°C, ganz besonders bevorzugt von 25 bis 75°C auf, da die Löslichkeit von DTPMP oberhalb von 85°C in dem wasserhaltigen Rohprodukt nachteilig zu hoch ist.

Bevorzugt wird das wässrige Rohprodukt durch den Eintrag kinetischer Energie während und nach dem Einbringen von Impfkeimen miteinander in Bewegung versetzt, sodass die Impfkeime und/oder Kristallisate in der wässrigen Suspension in Schwebe gehalten werden. Vorteilhaft bewirkt der Eintrag kinetischer Energie eine intensive und vollständige Durchmischung des wässrigen Rohprodukts und der gegebenenfalls enthaltenen Impfkeime im Reaktionsraum, wodurch eine homogene Verteilung der Komponenten und ein ständiger Stofftransport in der wässrigen Lösung gewährleistet sind.

Stofftransport bedeutet hierin, dass durch die Diffusion von einzelnen Ionen, Molekülen oder Ionen- und Molekülaggregaten, enthaltend DTPMP, aus der wässrigen Lösung an die Kontaktfläche des Impfkeims und/oder des Kristallisates ein Aufwachsen der Kristallisate durch Adsorption beschleunigt wird.

Vorteilhaft findet nach Diffusion der Ionen, Moleküle oder Ionen- und Molekülaggregate, enthaltend DTPMP, an die Kontaktfläche des Impfkeims und/oder des Kristallisates und Adsorption dieser auf der Kontaktfläche derselben eine Oberflächendiffusion der Präkursoren statt, was den Vorgang der kontrollierten Kristallisation der Feststoffpartikel, enthaltend DTPMP begünstigt.

Dem Fachmann ist generell bekannt, dass zur Kristallisation der Eintrag kinetischer Energie nicht erforderlich ist, d.h. dass sich das System in Ruhe befindet.

Überraschend hat sich nun gezeigt, dass die Bildung des Kristallisates, insbesondere das Aufwachsen der Kristallschicht durch Adsorption mit dem Vorhandensein von Impfkeimen und/oder von Kristallisaten, die von den idealen Kristallformen abweichende Bruchkanten aufweisen, begünstigt ist. Dabei erfolgt vorteilhaft durch den Eintrag kinetischer Energie eine mechanische Zerschlagung an der Oberfläche des Impfkeims und/oder des Kristallisates, wodurch eine sekundäre Keimbildung stattfindet. Durch die mechanische Zerschlagung an der Oberfläche des Impfkeims und/oder den Kristallisaten werden vorteilhaft stets neue aktive Stellen gebildet, die durch ständige Diffusion und Adsorption von einzelnen Ionen, Molekülen oder Ionen- und Molekülaggregaten, enthaltend DTPMP, aus der wässrigen Lösung an die Kontaktfläche des Impfkeims und/oder des Kristallisates abgesättigt werden. Mithin ist der Eintrag kinetischer Energie für die Realisierung des erfindungsgemäßen Verfahrens zwingend.

Nach einer bevorzugten Ausgestaltung der vorliegenden Erfindung erfolgt der Eintrag kinetischer Energie vorteilhaft so, dass eine mechanische Zerschlagung an der Oberfläche des Impfkeims und/oder des Kristallisates erfolgt und sekundäre Keime gebildet werden, wobei die Reynolds-Zahl der Rührorgane vorzugsweise oberhalb von Re (Rühren) = 10 besonders bevorzugt in einem Kennzahlbereich von 50 bis 4000 liegt.

Der Effekt der mechanischen Zerschlagung eingebrachter Impfkeime und/oder Kristallisate kann zudem förderlich erhöht werden durch die Erhöhung der Trübedichte und/oder Modifikation der Rührergeometrie. Vorteilhaft wird hierdurch die Wahrscheinlichkeit wirksamer Zusammenstöße zwischen den Impfkeimen und/oder Kristallisaten erhöht.

Der Prozess der Kristallisation in Form des Anwachsens einer Kristallschicht auf dem Impfkeim oder dem Kristallisat kann beispielsweise durch mikroskopische, elektronenmikroskopische, thermogravimetrische Analysenmethoden und Laserbeugung kontrolliert werden. Die Zusammensetzung der kristallinen Feststoffe kann beispielsweise mittels hochauflösender Kernspinresonanzspektroskopie (NMR) oder Röntgendiffraktometrie bestimmt werden. Die Bestimmung des Aktivgehalts an DTPMP im wässrigen Rohprodukt erfolgt beispielsweise mittels komplexometrischer Titration oder Säure-Base-Titration. Gehalte anderer Bestandteile, wie Chloridionen und phosphorhaltiger Verunreinigungen können bspw. über argentometrische und/oder iodometrische Titration, Kapillarelektrophorese oder spektrophotometrisch bestimmt werden.

Nach einer bevorzugten Ausgestaltung des erfindungsgemäßen Verfahrens erfolgt der Eintrag kinetischer Energie in das System durch Rühren und/oder Schütteln und/oder Ultraschallbehandlung, um vorteilhaft eine intensive Durchmischung des Systems zu gewährleisten.

Bevorzugt sind die Drehzahlen beim Rühren und/oder Schütteln stufenlos veränderbar, um die gewünschte Rühr- bzw. Schüttelbewegung optimal einstellen zu können. Vorteilhaft wird durch den Eintrag kinetischer Energie der stark diffusionskontrollierte Stofftransport bei der Bildung des Kristallisates erhöht. Diffusionskontrollierter Stofftransport bedeutet hierin, dass durch Diffusion von einzelnen Ionen, Molekülen oder Ionen- und Molekülaggregaten, enthaltend DTPMP aus einer Lösung an die Kontaktfläche der Impfkeime oder Kristallisate ein geordnetes Wachstum der derselben und die Bildung kristalliner Strukturen beschleunigt wird.

Erfindungsgemäß wird unter dem Begriff Kristallisat ein bevorzugt partikulärer, kristalliner Feststoff verstanden, der in getrockneter Form die DTPMP als reine Säure mit einem Gesamtanteil von mehr als 75 Ma.-%, vorzugsweise mehr als 80 Ma.-%, besonders bevorzugt mindestens 85 Ma.-%, bspw. bestimmt mit einem NMR-Spektrometer, der Kapillarelectrophorese oder mittels komplexometrischer Titration enthält. Vorzugsweise weist ein Kristallisat eine Kantenlänge im Bereich von 20 bis 1000 *µ*m, besonders bevorzugt 30 bis 500 *µ*m, ganz besonders bevorzugt von 30 bis 200 *µ*m auf.

Die im Anschluss an das erfindungsgemäße Verfahren erhaltenen Kristallisate werden als lanzetten-, plättchen- oder quaderförmige Kristalle, enthaltend DTPMP als reine Säure, erhalten.

Bevorzugt weist ein Kristallisat Verunreinigungen (wie oben beschrieben) lediglich mit einem Gesamtanteil von weniger als 1,0 Ma.-%, besonders bevorzugt weniger als 0,5 Ma.-%, aber ganz besonders bevorzugt von weniger als 0,3 Ma.-% auf. Dem Fachmann ist aber bekannt, dass einzelne Verunreinigungen mit einem Anteil unterhalb der Nachweisgrenze vorhanden sein können.

Bevorzugt weist ein Kristallisat die Aminoalkylenphosphonsäure DTPMP in Form des kristallinen Anhydrats (d.h. die reine Säure DTPMP bei der alle Phosphonsäuregruppen protoniert vorliegen), des Mono- oder des Dihydrats der Säure DTPMP, besonders bevorzugt in Form des Monohydrats der Säure DTPMP auf.

Im Sinne der Erfindung bezeichnet der Begriff "Monohydrat" bzw. "Dihydrat" ein Kristallisat der freien Säure DTPMP, wobei das Kristallisat in Form einer festen Anlagerungsverbindung ("Solvat") vorliegt, bei dem ein bzw. zwei Wassermoleküle ("Kristallwasser") an ein Molekül der Säure DTPMP angelagert sind, so dass die Wassermoleküle einen Teil der Kristallstruktur des Kristallisates bilden. Der Begriff "Anhydrat" bezeichnet indes ein kristallwasserfreies Kristallisat der Säure DTPMP, wobei kristallwasserfrei bedeutet, dass rechnerisch (bezogen auf ein Kristallisat) an ein Molekül der Säure DTPMP weniger als 0,4, bevorzugt weniger als 0,3, besonders bevorzugt weniger als 0,2 Wassermoleküle angelagert sind. Stöchiometrisch weist das Monohydrat 3 Ma.-% Wasser im Kristallisat, das Dihydrat 5,9 Ma.-% Wasser im Kristallisat auf.

Haftwasser bezeichnet definitionsgemäß die Summe aus Kapillar- und Adsorptionswasser. Adsorptionswasser bezeichnet an der Oberfläche von Kristallisaten angelagertes Wasser, wobei sich ein Film von Wassermolekülen ausbildet. Das Kapillarwasser bezeichnet die Wassermenge, die in den Kapillaren eines Feststoffes (Porendurchmesser bis maximal 0,2 µm) durch Adhäsion und Kohäsion (entspricht Saugspannung) festgehalten wird. Dem Fachmann ist dabei bekannt, dass die Wassermenge, die einen Oberflächenfilm bildet bzw. die Kapillaren ausfüllt, in Abhängigkeit von den Umgebungsparametern (bspw. Temperatur, Druck, Wasserspannung) variiert.

Methoden zur chemischen Analyse von Feststoffen sind dem Fachmann bestens bekannt und basieren bspw. auf der Thermoanalyse (DTA/TG). Auch sind dem Fachmann Methoden zur strukturellen Analyse bekannt und basieren bspw. auf Röntgenkristallstrukturanalysen (z.B. Pulverdiffraktometrie, Einkristallstrukturanalyse) oder der Bewertung von epitaktischen Effekten.

Nach einer bevorzugten Ausgestaltung der vorliegenden Erfindung sind die über das erfindungsgemäße Verfahren erhaltenen Kristallisate plättchenförmig oder quadratisch und weisen ein Aspektverhältnis (Länge zu Breite) im Bereich von 1:1 bis 10:1 auf.

Nach einer alternativen Ausgestaltung der vorliegenden Erfindung sind die über das erfindungsgemäße Verfahren erhaltenen Kristallisate bevorzugt lanzettenförmig und weisen ein Aspektverhältnis von mindestens 3:1 auf.

Nach einer bevorzugten Ausgestaltung des erfindungsgemäßen Verfahrens ist der Impfkeim ein zerkleinertes Kristallisat, mit identischer Zusammensetzung desselben.

Die Abtrennung des Kristallisates von dem wässrigen Rohprodukt erfolgt bevorzugt durch Sedimentation (z.B. durch Zentrifugation) und/oder durch Filtration (z.B. mit einem Büchnertrichter). Nach einer besonders bevorzugten Ausgestaltung der Erfindung erfolgt die Abtrennung des Kristallisates von dem wässrigen Rohprodukt über eine Filterzentrifugation, sodass vorteilhaft durch die Kombination von Zentrifugalkraft und Filtration Reste an Mutterlauge (d.h. des wässrigen Rohproduktes) von dem Kristallisat und dessen Oberfläche abgetrennt werden.

Es kann optional vorgesehen sein, dass das abgetrennte Kristallisat nach der Abtrennung mehrmals mit kaltem, destilliertem Wasser und/oder einer wasserhaltigen Lösung, enthaltend z.B. 5 bis 20 Ma.-% Ethanol oder 5 bis 10 Ma.-% Salzsäure gewaschen wird. Insbesondere durch ein mehrmaliges Waschen mit einer wasserhaltigen Lösung, enthaltend z.B. 5 bis 20 Ma.-% Ethanol, wird ein Waschverlust an abgetrenntem Kristallisat verringert, da die reine Säure DTPMP darin nur gering löslich ist.

Nach Abtrennung des Kristallisates von dem wasserhaltigen Rohprodukt liegt das abgetrennte Kristallisat in Form als kristalliner Feststoff, enthaltend DTPMP in Form als reine Säure vor, wobei das abgetrennte Kristallisat DTPMP mit einem Trockensubstanzgehalt von mindestens 75 Ma.-%, vorzugsweise mehr als 80 Ma.-%, besonders bevorzugt zwischen 85 Ma.-% und 99 Ma.-% enthält.

Nach einer bevorzugten Ausgestaltung der vorliegenden Erfindung weist das Verfahren mindestens eine isotherme Prozessetappe auf, in der die Bedingungen zur Feststoffgewinnung kristalliner DTPMP so gewählt werden, dass die Temperaturdifferenz in dem wässrigen Rohprodukt über einen definierten Zeitraum des Eintrags kinetischer Energie konstant, d.h. maximal 2,5 K, bevorzugt maximal 2 K, besonders bevorzugt maximal 1 K ist. Durch diese exakte isotherme Prozessführung werden vorteilhaft Kristallisate mit einem hohen Reinheitsgrad gewonnen. Alternativ kann zur Stimulation des Kristallwachstums und Keimbildung temperaturseitig gepulst werden.

Nach einer bevorzugten Ausgestaltung des erfindungsgemäßen Verfahrens wird die Temperatur des wässrigen Rohprodukts zwischen den isothermen Prozessetappen mit einem definierten Temperaturprofil von 1 bis 7 K pro Tag (d.h. 24 h), bevorzugt von 2 bis 6 K pro Tag, ganz besonders bevorzugt 2 bis 5 K pro Tag verringert. Durch eine stufenweise oder graduierte Verringerung der Temperatur wird das temperaturabhängige Löslichkeitsprodukt der zur Übersättigung neigenden DTPMP in dem wässrigen Rohprodukt verringert, wobei die Tendenz zur Kristallisation der gelösten DTPMP zur DTPMP in Form als kristalliner Feststoff erhöht wird. Vorteilhaft wird durch die Verringerung der Temperatur der Zeitraum zur Anreicherung größerer Mengen an kristallinem Feststoff, enthaltend DTPMP verkürzt.

Nach einer besonders bevorzugten Ausgestaltung des erfindungsgemäßen Verfahrens ist das definierte Temperaturprofil des einstufigen Verfahrens in mindestens zwei Etappen unterteilt, wobei die Prozesstemperatur:
a) zur Einbringung der Impfkeime zunächst auf eine Temperatur im Bereich von 25 bis 85°C, besonders bevorzugt von 30 bis 80°C, ganz besonders bevorzugt von 35 bis 75°C eingestellt,
b) dann stufenweise oder graduiert um 1 bis 7 K pro Tag, bevorzugt 2 bis 6 K pro Tag, ganz besonders bevorzugt 2 bis 5 K pro Tag verringert, und
c) anschließend über einen definierten Zeitraum konstant (isotherm) gehalten wird.

Bevorzugt wird das erfindungsgemäße Verfahren zur quasikontinuierlichen Feststoffgewinnung in der stationären Betriebsphase (engl. *steady state*) unter konstanten Prozessbedingungen (konstanter Temperatur) vollzogen. Quasikontinuierlich bedeutet im Sinne der Erfindung, dass das Verfahren zur Feststoffgewinnung kristalliner DTPMP derart ausgestaltet ist, dass nach einer teilweisen Abtrennung von angereichertem Kristallisat von dem wässrigen Rohprodukt, das Verfahren weitergeführt und/oder mindestens ein weiteres Mal durchlaufen wird. Dabei erfolgt in gewissen Zeitabständen, insbesondere alle 0,5 bis 12 h, die teilweise Entnahme einer Menge an wässrigem Rohprodukt im Bereich von 10 bis 50 Ma.-%, wobei der Anteil der entnommenen Menge durch Zugabe einer identischen Menge an frischem wässrigem Rohprodukt (wie oben definiert) ersetzt wird. Dabei kann vorgesehen sein, dass der Menge frischen wässrigen Rohprodukts gezielt Impfkeime zugesetzt werden. In jedem Fall liegt die Trübedichte des wässrigen Rohprodukts bei der quasikontinuierlichen Feststoffgewinnung im Bereich von 20 bis 55%.

Von der entnommenen Menge an wässrigem Rohprodukt erfolgt die Abtrennung des gereiften Kristallisates wie oben beschrieben.

Vorzugsweise erfolgen die mindestens eine teilweise Entnahme einer Menge an wässrigem Rohprodukt und die Zugabe einer identischen Menge an frischem wässrigem Rohprodukt innerhalb der isothermen Prozessetappe.

Vorzugsweise wird das erfindungsgemäße Verfahren zur quasikontinuierlichen Feststoffgewinnung als Batch-Verfahren in einem Rührkessel betrieben.

Dem Fachmann ist dabei bekannt, dass zwischen dem Animpfen und der stationären Betriebsphase eine Anfahrphase angeordnet ist. Die Anfahrphase umfasst definitionsgemäß das Zeitintervall vom Animpfen bis zum Erreichen des stationären Zustands.

Im Sinne der vorliegenden Erfindung beträgt das Zeitintervall der Anfahrphase (d.h. der Zeitraum bis zum Übergang in den stationären Betriebszustand) zwischen 1 bis 48 Stunden.

Nach einer bevorzugten Ausgestaltung des erfindungsgemäßen Verfahrens wird das Kristallisat nach der Abtrennung getrocknet, sodass das abgetrennte Kristallisat nach der Trocknung Wasser mit einem Massengehalt von maximal 25 Ma.-%, bevorzugt maximal 15 Ma.-% enthält, wobei bevorzugt Wasser und gegebenenfalls andere flüchtige Verbindungen (z.B. Alkohole oder Ether) entfernt werden.

Bevorzugt erfolgt die Trocknung bei einer Temperatur oberhalb von 40°C, besonders bevorzugt bei Temperaturen oberhalb von 50°C. Optional oder zusätzlich erfolgt die Trocknung des abgetrennten Kristallisates durch das Anlegen eines Vakuums.

Liegt der Trockensubstanzgehalt des abgetrennten Kristallisates, enthaltend DTPMP bei weniger als 60 Ma.-%, so beginnt sich der Feststoff ab einer Temperatur von ca. 40-50°C in der enthaltenen Restfeuchte zu lösen, was für industrielle Prozesse eine zusätzlich vorgeschaltete energie- und apparateaufwendige Vortrocknung notwendig macht. Bevorzugt werden daher nach der Abtrennung von der wässrigen Lösung nur solche Kristallisate für die Trocknung eingesetzt, die einen Trockensubstanzgehalt von mehr als 65 Ma.-% aufweisen.

Bevorzugt wird die spezifische Oberfläche des abgetrennten Kristallisates, enthaltend DTPMP in Form als Feststoff durch Zerkleinerung größerer Aggregate während des Trocknungsprozesses groß gehalten. Dabei kann optional vorgesehen sein, dass das getrocknete Kristallisat nach dem Trocknungsprozess für eine bessere Konfektionierung und Lagerung grob oder fein zerkleinert wird. Vorteilhaft wird dadurch ein Kristallisat mit einer homogenen Korngrößenverteilung erhalten. Die Einstellung des Kornspektrums kann dabei über Siebung, zum Beispiel mittels Schwingsieb, erfolgen. Durch parallele Verwendung von zwei Siebnetzen lassen sich dabei gezielt einzelne Kornfraktionen gewinnen.

Die Methoden zur Zerkleinerung und/oder Pulverisierung von Kristallisaten sind dem Fachmann bekannt und umfassen bspw. Grobkornbrecher, Stift- und Walzenmühlen.

Zudem wurde nun erkannt, dass bei der Trocknung von abgetrennten Kristallisaten, enthaltend die DTPMP in Form als reine Säure, mittels Sprühtrocknung im Temperaturbereich zwischen 125-140°C ein inkongruentes Schmelzen des Feststoffes unter Wasserabgabe erfolgt. So erlauben bekannte Verfahren zur Trocknung von Feststoffen, enthaltend DTPMP, lediglich die Trocknung von Natrium-haltigen DTPMP-Feststoffen, wobei das nach der Synthese erhaltene DTPMP durch Zugabe von Natronlauge anneutralisiert ist, mit einem stöchiometrischen Na/DTPMP-Verhältnis von mindestens 2 zu 1. Nachteilig werden dadurch stets Feststoffgemische, enthaltend DTPMP in Form als NaₓDTPMP-Salz (wobei x eine Zahl im Bereich von 2 bis 10 ist), erhalten, sodass kein Feststoff isoliert werden kann, der ausschließlich DTPMP in Form als Säure aufweist.

Überraschend wurde aber gefunden, dass bei Trocknung unterhalb von 125°C bis zum Vorliegen eines stöchiometrischen Na/DTPMP-Verhältnisses von 2 zu 1 ein Feststoff, enthaltend DTPMP in Form als Säure, erhalten wird.

Nach einer alternativen Ausführungsform des erfindungsgemäßen Verfahrens erfolgt daher die Trocknung mittels Sprühtrocknung bei einer Temperatur unterhalb von 125°C, besonders bevorzugt unterhalb von 120°C, ganz besonders bevorzugt im Temperaturbereich von 90 bis 120°C.

Überraschend wurde ferner gefunden, dass die Kristallisation der DTPMP und die Bildung des Kristallisates in einem wässrigen Rohprodukt, enthaltend bis zu 5 Ma.-% einer starken Säure vorteilhaft beschleunigt sind. Starke Säuren sind dabei bevorzugt ausgewählt aus der Gruppe der Mineralsäuren und/oder organischen Säuren, die einerseits synthesebedingt oder durch gezielte Zugabe in dem wässrigen Rohprodukt enthalten sind.

Nach einer erfindungsgemäßen Ausgestaltung enthält das wässrige Rohprodukt starke Säuren, vorzugsweise Mineralsäure, wie bspw. einer Halogenwasserstoffsäure, Carbonsäure, Phosphorsäure oder Schwefelsäure eingestellt, insbesondere einer Halogenwasserstoffsäure, ganz besonders bevorzugt Chlorwasserstoffsäure mit einem Gesamtgehalt im Bereich von 1 bis 5 Ma.-%, vorzugsweise im Bereich von 1 bis 4,5 Ma.-%. Es werden aber auch wässrige Rohprodukte mit einem Gesamtgehalt an Mineralsäuren im Bereich von 1 bis 4 Ma.% eingesetzt.

Bevorzugt erfolgt dabei durch die Zugabe einer hochkonzentrierten Säure die definierte Einstellung des pH-Wertes, sodass DTPMP in dem wässrigen Rohprodukt vorteilhaft in Form als elektrisch neutrales Derivat und/oder in Form als positiv geladenes Derivat vorliegt. Die fünf Phosphonsäuregruppen (-PO₃²⁻) von DTPMP liegen dabei bevorzugt vollständig oder zumindest teilweise in ihrer protonierten Form vor, wobei die Aminogruppen vorteilhaft in protonierter Form als quaternäres Amin enthalten sind.

Gegebenenfalls wird das über das erfindungsgemäße Verfahren erhaltene Kristallisat durch einfache oder mehrfache Umkristallisation und gegebenenfalls mit zwischengeschalteten Zwischensyntheseprozessen zur Minimierung der Synthesenebenprodukte gewonnen.

Verfahren zur Umkristallisation sind dem Fachmann bestens bekannt, wobei die Lösung, aus der die über ein erfindungsgemäßes Verfahren erhaltene DTPMP umkristallisiert wird, bevorzugt mit einer ausreichenden Impfkeimmenge kontaktiert wird und gleichzeitig der Eintrag kinetischer Energie erfolgt.

Die Aminoalkylenphosphonsäure DTPMP ist an sich bekannt. Allerdings sind zum gegenwärtigen Zeitpunkt weder ein Feststoff der reinen Säure DTPMP beschrieben noch finden sich Angaben zu Kristallmodifikationen dieser.

Werden Feststoffe industriell als chemische Rohstoffe eingesetzt, so erfolgt dies in der Regel als lose Schüttgüter. Qualitätsparameter, wie leichte Dosierbarkeit und Lagerstabilität, dieser Feststoffe sind dabei essentielle Voraussetzungen für deren erfolgreichen Einsatz.

Die während des Trocknungsprozesses von marktüblichen DTPMP-Qualitäten (bspw. Natriumsalze) auftretende hohe Klebeneigung schränkt allerdings die Anwendung thermischer Trocknungsverfahren stark ein. So sind moderne Wirbelschichtverfahren nur mit geringer Trocknungsleistung und unter Zusatz von Trägern (Begleitstoffe) realisierbar. Diese Träger sollen das Aneinanderkleben einzelner Produktkörner während der Herstellung reduzieren und die Hygroskopizität während der Lagerung herabsetzen, bringen aber gleichzeitig dem Aktivstoff-DTPMP artfremde und in der Regel unerwünschte Begleitstoffe (z.Bsp. Silikate) in das Produkt und verringern zusätzlich den Aktivgehalt des Produktes erheblich. Sprühgetrocknete Pulver verblocken aufgrund ihrer extrem hohen Hygroskopizität in kürzester Zeit und sind damit nicht mehr dosierbar. Aus diesen Gründen konnten sich bis zum gegenwärtigen Zeitpunkt mittels thermischer Trocknungsverfahren hergestellte DTPMP-Feststoffe in industriellem Maßstab nicht etablieren.

Besonders nachteilig weisen bekannte Feststoffe aus den Salzen der DTPMP (bspw. Natriumsalze) herstellungsbedingt hohe Anteile an Zusatzstoffen (Begleitstoffe) bei gleichzeigt niedrigen Anteilen (kleiner 40 Ma.-%) an DTPMP in diesen Feststoffen auf. Gleichwohl sind die Feststoffe aus den Salzen der DTPMP nachteilig stark hygroskopisch, so dass getrocknete Feststoffe selbst unter Verschluss zu einer zähflüssigen Masse verklumpen (sog. Klebeneigung). Folglich ist die Portionierung für den Formulierer erschwert, was wiederum die Einsatzbreite bekannter Trockenstoffe beschränkt.

Demnach ist es ebenfalls Aufgabe der Erfindung, einen Feststoff der reinen Säure DTPMP bereitzustellen.

Chemische Verbindungen können in unterschiedlichen Kristallmodifikationen vorliegen und dabei zur Ausbildung unterschiedlichster partikulärer Strukturen, wie bspw. Nadeln oder Plättchen neigen, wobei sich diese in ihren makroskopischen Eigenschaften unterscheiden. So weisen bspw. Nadeln gegenüber Plättchen eine signifikant geringere Schüttdichte auf, was gerade für die Lagerung oder den Transport dieser Verbindung von Nachteil ist.

Ein anderer wichtiger Aspekt für eine industrielle Anwendung ist, ob eine chemische Verbindung in Form als Kristallisat oder als amorphes Material vorliegt, wobei letzteres nachteilig zur Ausbildung großer, unregelmäßiger Agglomerate neigt. Essentielle Faktoren für die ökonomische und technische Verwertbarkeit sind dabei Kristallitgröße (d.h. je größer das Kristallisat desto günstiger, da der Anteil der Oberfläche am Volumen gering ist) und Kristallform (d.h. kompakte Kristallisate sind besser in der Handhabbarkeit als zur Textur neigende Formen, bspw. Nadeln oder Plättchen) da diese direkt die spezifische Oberfläche und die Filtrierbarkeit, Waschbarkeit, Trockenbarkeit und Hygroskopizität beeinflussen.

Überraschend wurden drei Kristallmodifikationen der reinen Säure DTPMP gefunden, wobei die reine Säure DTPMP, vorzugsweise als reines Hydrat, gemäß der allgemeinen Formel (I) vorliegt: 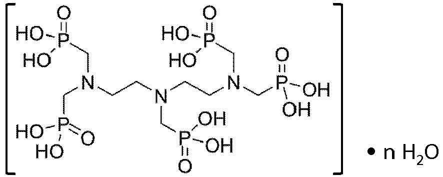 wobei n eine Zahl zwischen 0 und 2, vorzugsweise zwischen 0,5 und 1,5 ist.

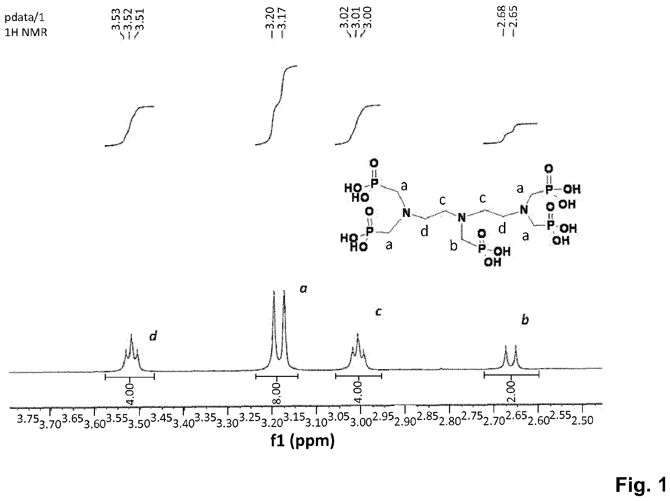

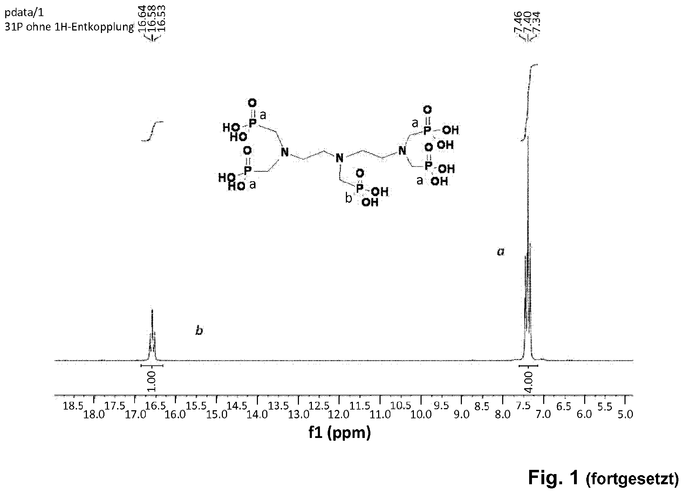

Die drei Kristallmodifikationen der reinen DTPMP zeichnen sich durch die in Figur 1 dargestellten und nachfolgend aufgeführten charakteristischen chemischen Verschiebungen in einem ¹H-NMR-Spektrum bzw. ³¹P-NMR-Spektrum (gemessen bei pH 6,5) aus:
¹H NMR (500 MHz, D₂O; ppm): **Δ** = 3.52 (t, *J* = 6.3 Hz, 4H), 3.19 (d, *J* = 11.6 Hz, 8H), 3.01 (t, *J* = 6.2 Hz, 4H), 2.66 (d, *J* = 11.2 Hz, 2H).
³¹P NMR (202 MHz, D₂O; ppm): **Δ** = 16.58 (t, *J* = 11.1 Hz), 7.40 (t, *J* = 11.5 Hz)

Besonders vorteilhaft hat sich gezeigt, dass die erfindungsgemäßen Kristallisate, enthaltend die DTPMP als reine Säure nicht hygroskopisch sind und daher im Gegensatz zu den Salzen der DTPMP nicht zu einer zähflüssigen Masse verklumpen. Mithin lässt sich die DTPMP leichter portionieren, was dem Formulierer eine Vielzahl neuer Einsatzmöglichkeiten eröffnet.

Definitionsgemäß bezeichnet der Begriff "Hygroskopizität" das Feuchtigkeitsaufnahmevermögen von Feststoffen aus der Umgebung, d.h. auf den relativen Feuchtigkeitsgehalt der Luft bei einer bestimmten Temperatur durch Wasserdampfaufnahme oder -abgabe zu reagieren. Unerwünschter Weise zerfließen oder verklumpen die meisten feuchtigkeitsaufnehmenden Feststoffe durch die Wasseraufnahme.

Vorzugsweise weist das erfindungsgemäße Kristallisat der reinen Säure DTPMP, insbesondere die Kristallmodifikationen *α, β* und *γ,* bei einer Temperatur von 22°C und einer relativen Luftfeuchtigkeit von 55 Ma.-% eine Hygroskopizität von weniger als 1 Ma.-% Wasser pro 10 Tage auf. Besonders bevorzugt liegt die Hygroskopizität des erfindungsgemäßen Kristallisats unter den vorgenannten Bedingungen unterhalb von 1 Ma.-% Wasser pro 20 Tagen.

Vor diesem Hintergrund ist es zudem Gegenstand der vorliegenden Erfindung eine erste Kristallmodifikation der reinen Säure DTPMP unter der erfindungsgemäßen Bezeichnung *α-*Kristallmodifikation bereitzustellen, wobei sich das entsprechende Röntgenbeugungsdiagramm der *α*-Kristallmodifikation (erhalten durch Cu-K_{α}-Strahlung [1,54178 Å] bei 25°C) durch charakteristische Reflexe bei folgenden doppelten Beugungswinkeln 2Θ (in Grad) und Netzebenenabständen d in Å⁻¹ auszeichnet, wobei alle Reflexlagen mit einer Ungenauigkeit von ± 0,2° behaftet sind:

| *α*-Kristallmodifikation | | |
|---|---|---|
| **2Θ** | **d** | **rel. Intensität** |
| 6,8 | 13,00 | 38,00% |
| 17,9 | 5,0 | 35,60% |
| 20,2 | 4,40 | 41,00% |
| 22,2 | 4,00 | 45,80% |
| 22,5 | 3,95 | 100,00% |
| 23,0 | 3,86 | 72,60% |
| 23,1 | 3,84 | 39,10% |
| 25,0 | 3,6 | 64,30% |

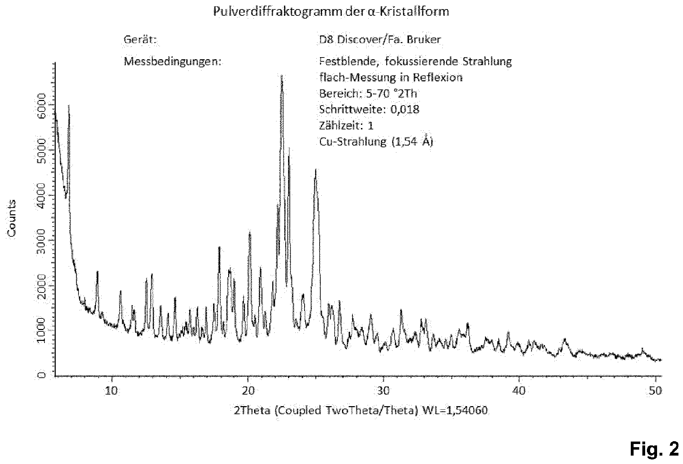

Ein mit Cu-K_{α}1-Strahlung aufgenommenes Röntgenbeugungsdiagramm von Kristallisaten der erfindungsgemäßen *α*-Kristallmodifikation ist in Figur 2 dargestellt und belegt die Abwesenheit einer anderen Kristallmodifikation. Abwesenheit einer anderen Kristallmodifikation bedeutet, dass sowohl die *β*- als auch die *γ*-Kristallmodifikation der reinen Säure DTPMP durch bekannte Analysenverfahren nicht mehr nachweisbar sind.

Bevorzugt weist die *α*-Kristallmodifikation DTPMP in Form des kristallinen Monohydrats der reinen Säure DTPMP (d.h. bei der alle Phosphonsäuregruppen protoniert vorliegen) auf. Die erfindungsgemäßen Kristallisate der *α*-Kristallmodifikation können Wassermoleküle im Kristallgitter enthalten, normalerweise bis zu 4 Ma.-%, bezogen auf das Gesamtgewicht.

Überraschend wurde gefunden, dass (entgegen zu Kristallisaten der *β*-Kristallmodifikation) ausschließlich Kristallisate der *α*-Kristallmodifikation epitaktisch auf Kristallisaten der *γ-*Kristallmodifikation aufwachsen. Vorteilhaft kann das epitaktische Aufwachsen zur gezielten Kristallisation kompakter Kristallisate bei moderaten Temperaturen genutzt werden, indem die Kristallisate der *γ*-Kristallmodifikation als Impfmaterial eingesetzt werden, der Kristallisationsprozess aber im Existenzbereich der *α*-Kristallmodifikation erfolgt. Diese Epitaxie ist gleichfalls ein klares und eindeutiges Unterscheidungsmerkmal zur Abgrenzung der *α*- und *β*-Kristallmodifikation voneinander.

Vorzugsweise wird die *α*-Kristallmodifikation durch ein erfindungsgemäßes Verfahren erhalten. Eine reine oder überwiegend reine *α*-Kristallmodifikation entsteht besonders bevorzugt, wenn man von einer wässrigen Lösung mit einem pH-Wert kleiner 2 ausgeht. Bevorzugt enthält das wässrige Rohprodukt DTPMP mit einem Gesamtanteil im Bereich von 10 und 35 Ma.-%, besonders bevorzugt 10 und 30 Ma.-%.

Vorzugsweise weist das wässrige Rohprodukt zur Herstellung der *α*-Kristallmodifikation eine Temperatur im Bereich von 0 bis 40°C, besonders bevorzugt von 5 bis 35°C auf.

Überraschend wurde gefunden, dass es für die Herstellung von Kristallisaten der α-Kristallmodifikation, die lediglich eine Kantenlänge von maximal 20 *µ*m aufweisen, genügt, als Impfkeim ein Impfmaterial mit einem Gesamtanteil an DTPMP im Bereich von 30 bis 95 Ma.-%. einzusetzen.

Bevorzugt sind Kristallisate der *α*-Kristallmodifikation plättchenförmig und weisen ein Aspektverhältnis (Länge zu Breite) im Bereich von 1:1 bis 10:1 und ein Breite-zu-Tiefe-Verhältnis von mindestens 5:1 auf. Vorzugsweise liegt die volumenbezogene spezifische Oberfläche von Kristallisaten der *α*-Kristallmodifikation oberhalb von 1,0 m²/m³.

Die volumenbezogene spezifische Oberfläche eines Körpers ist dabei als das Verhältnis seiner Oberfläche (in m²) zu seinem Volumen (in m³) definiert.

Hygroskopizität bezeichnet die Affinität eines Stoffes Wasser aufzunehmen. Dem Fachmann ist dabei bekannt, dass die Hygroskopizität stoffspezifisch ist, und sowohl von Reinheit (d.h. je reiner, desto geringer die Hygroskopizität) als auch von der volumenspezifischen Oberfläche (je kleiner die spezifische Oberfläche, desto geringer die Hygroskopizität) abhängig ist.

Nach einer bevorzugten Ausgestaltung der vorliegenden Erfindung können Kristallisate der *α*-Kristallmodifikation bspw. durch ein Verfahren gewonnen werden, wobei direkt nach der Synthese der DTPMP ein mehrstufiges Reinigungsverfahren stattfindet, sodass zunächst eine Vorreinigung durch Ausfällung bei ca. 30°C erfolgt. Das erhaltene Präzipitat wird von der Reaktionslösung abgetrennt und in einem nachgeschalteten Reaktor in konzentrierter Form erneut in Lösung überführt. Nach erneuter Kristallisation wird der erhaltene Feststoff isoliert und einer Trocknung unterzogen. Der erhaltene Feststoff besteht aus plättchenförmigen Kristallisaten, die eine Kantenlänge von ca. 20 *µ*m aufweisen und teilweise zu Aggregaten verwachsen sind.

Überraschend wurde zudem gefunden, dass durch ein erfindungsgemäßes Verfahren bei leicht erhöhtem pH-Wert eine zweite, bisher unbekannte Kristallmodifikation der reinen Säure DTPMP entsteht. Die zweite Kristallmodifikation wird als *β*-Kristallmodifikation bezeichnet.

Gegenstand der vorliegenden Erfindung ist demnach eine *β*-Kristallmodifikation der reinen Säure DTPMP, wobei sich das entsprechende Röntgenbeugungsdiagramm der *β*-Kristallmodifikation (erhalten bei Cu-K_{α}-Strahlung) durch charakteristische Reflexe bei folgenden doppelten Beugungswinkeln 2Θ (in Grad) und Netzebenenabständen d in Å⁻¹ auszeichnet, wobei alle Reflexlagen mit einer Ungenauigkeit von ± 0,2° behaftet sind:

| *β* -Kristallmodifikation | | |
|---|---|---|
| **2Θ** | **d** | **rel. Intensität** |
| 6,7 | 13,17 | 41,30% |
| 18,6 | 4,77 | 43,80% |
| 19,6 | 4,5 | 36,50% |
| 20,0 | 4,4 | 39,80% |
| 22,1 | 4,0 | 65,10% |
| 22,5 | 3,9 | 79,10% |
| 23,0 | 3,9 | 76,80% |
| 24,8 | 3,6 | 50,60% |
| 25,2 | 3,5 | 35,70% |

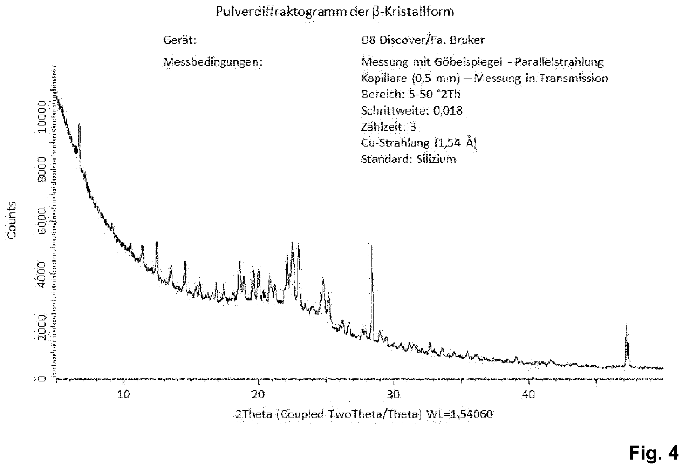

Ein mit Cu-K_{α}1-Strahlung aufgenommenes Röntgenbeugungsdiagramm von Kristallisaten der erfindungsgemäßen *β*-Kristallmodifikation ist in Figur 4 dargestellt und Belegt die Abwesenheit einer anderen Kristallmodifikation. Abwesenheit einer anderen Kristallmodifikation bedeutet, dass weder die *α*- noch die *γ*-Kristallmodifikation der reinen Säure DTPMP durch bekannte Analysenverfahren nicht mehr nachweisbar sind.

Bevorzugt weist die *β*-Kristallmodifikation DTPMP in Form des kristallinen Monohydrats der reinen Säure DTPMP (d.h. bei der alle Phosphonsäuregruppen protoniert vorliegen) auf. Die erfindungsgemäßen Kristallisate der *β*-Kristallmodifikation können Wassermoleküle im Kristallgitter enthalten, normalerweise bis zu 4 Ma.-%, bezogen auf das Gesamtgewicht.

Vorzugsweise wird die *β*-Kristallmodifikation durch ein erfindungsgemäßes Verfahren erhalten. Eine reine oder überwiegend reine *β*-Kristallmodifikation entsteht besonders bevorzugt, wenn man von einer wässrigen Lösung mit einem pH-Wert kleiner 4, vorzugsweise kleiner 3 ausgeht. Bevorzugt erfolgt die Einstellung des pH-Werts durch Zugabe einer hochkonzentrierten Lauge, vorzugsweise einer Alkalilauge wie bspw. Natronlauge. Bevorzugt enthält das wässrige Rohprodukt DTPMP mit einem Gesamtanteil im Bereich von 15 und 55 Ma.-%, besonders bevorzugt 15 und 50 Ma.-%. Ganz besonders bevorzugt ist ein Bereich von 20 und 45 Ma.-%.

Vorzugsweise weist das wässrige Rohprodukt zur Herstellung der *β*-Kristallmodifikation eine Temperatur im Bereich von 5 bis 60°C, besonders bevorzugt von 35 bis 55°C auf.

Bevorzugt sind Kristallisate der *β*-Kristallmodifikation lanzetten-(d.h. Cutter-Schneidmesser)-förmig und weisen ein Aspektverhältnis (Länge zu Breite) von mindestens 3:1, besonders bevorzugt mindestens 10:1 und ein Breite-zu-Tiefe-Verhältnis von mindestens 5:1 auf. Vorzugsweise liegt die volumenbezogene spezifische Oberfläche von Kristallisaten der *β-*Kristallmodifikation im Bereich zwischen 0,2 bis 1,2 m²/m³, sodass an der Oberfläche abgetrennter Kristallisate nur wenig Haftwasser verbleibt. Vorteilhaft kann somit bei Kristallisaten der *β*-Kristallmodifikation vollständig oder zumindest teilweise auf eine anschließende Trocknung (wie oben beschrieben) verzichtet werden.

Gegenstand der vorliegenden Erfindung ist auch eine dritte, bisher unbekannte trikline Kristallmodifikation der reinen Säure DTPMP. Die dritte Kristallmodifikation wird als *γ*-Kristallmodifikation bezeichnet.

Das Röntgenbeugungsdiagramm der triklinen *γ*-Kristallmodifikation (erhalten bei Cu-K_{α}-Strahlung) zeichnet sich durch charakteristische Reflexe bei folgenden doppelten Beugungswinkeln 2Θ (in Grad) und Netzebenenabständen d in Å⁻¹ aus, wobei alle Reflexlagen mit einer Ungenauigkeit von ± 0,2° behaftet sind:

| *γ*-Kristallmodifikation | | |
|---|---|---|
| **2Θ** | **d** | **rel. Intensität** |
| 13,0 | 6,8 | 48,10% |
| 17,9 | 4,9 | 37,20% |
| 22,0 | 4,0 | 39,20% |
| 22,4 | 4,0 | 100,00% |
| 23,1 | 3,8 | 64,40% |
| 23,3 | 3,8 | 44,90% |
| 25,1 | 3,6 | 92,60% |
| 26,1 | 3,4 | 36,00% |

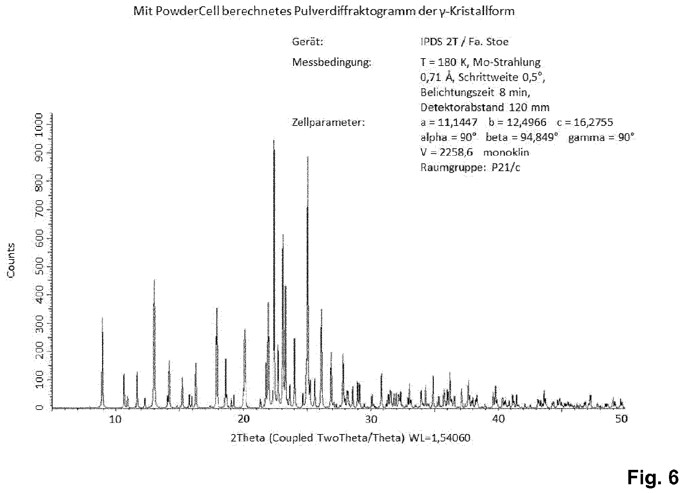

Ein mit Cu-K_{α}1-Strahlung aufgenommenes Röntgenbeugungsdiagramm von Kristallisaten der erfindungsgemäßen *γ*-Kristallmodifikation ist in Figur 6 dargestellt und belegt die Abwesenheit einer anderen Kristallmodifikation. Abwesenheit einer anderen Kristallmodifikation bedeutet, dass weder die *α*- noch die *β*-Kristallmodifikation der reinen Säure DTPMP durch bekannte Analysenverfahren nicht mehr nachweisbar sind.

Bevorzugt weist die *γ*-Kristallmodifikation DTPMP in Form des kristallinen Monohydrats der reinen Säure DTPMP (d.h. bei der alle Phosphonsäuregruppen protoniert vorliegen) auf. Die erfindungsgemäßen Kristallisate der *γ*-Kristallmodifikation können Wassermoleküle im Kristallgitter enthalten, normalerweise bis zu 4 Ma.-%, bezogen auf das Gesamtgewicht.

Vorzugsweise wird die *γ*-Kristallmodifikation durch ein erfindungsgemäßes Verfahren erhalten. Eine reine oder überwiegend reine *γ*-Kristallmodifikation entsteht besonders bevorzugt, wenn man von einer wässrigen Lösung mit einem pH-Wert kleiner 4, vorzugsweise kleiner 3 ausgeht. Bevorzugt erfolgt die Einstellung des pH-Werts durch Zugabe einer hochkonzentrierten Lauge, vorzugsweise einer Alkalilauge wie bspw. Natronlauge. Bevorzugt enthält das wässrige Rohprodukt DTPMP mit einem Gesamtanteil von mindestens 45 Ma.-%, besonders bevorzugt im Bereich von 45 und 60 Ma.-%, ganz besonders bevorzugt 45 und 55 Ma.-%.

Die *γ*-Kristallmodifikation erhält man vorzugsweise, wenn man eine wässrige Lösung auf eine Temperatur im Bereich von 40 bis 85°C, besonders bevorzugt 50 bis 80°C, ganz besonders auf über 55°C erwärmt.

Bevorzugt sind Kristallisate der *γ*-Kristallmodifikation quader- bis säulenförmig und weisen ein Aspektverhältnis (Länge zu Breite) im Bereich von 1:1 bis 10:1 und ein Breite-zu-Tiefe-Verhältnis von maximal 5:1 auf. Vorzugsweise beträgt die volumenbezogen spezifische Oberfläche von Kristallisaten der *γ*-Kristallmodifikation kleiner 0,3 m²/m³, sodass an der Oberfläche abgetrennter Kristallisate nur wenig bis kein Haftwasser verbleibt. Vorteilhaft kann somit bei Kristallisaten der *γ*-Kristallmodifikation vollständig auf eine anschließende Trocknung (wie oben beschrieben) verzichtet werden. Ganz besonders vorteilhaft lassen sich Kristallisate der *γ*-Kristallmodifikation einfach durch Pelletierung konfektionieren. Besonders vorteilhaft lassen sich für Kristallisate der *γ-*Kristallmodifikation, die nur eine geringe volumenbezogene spezifische Oberfläche aufweisen, auch ohne ein an die Abtrennung angeschlossenes Waschen hohe Reinheitsgrade erzielen.

Gegenstand der vorliegenden Erfindung ist auch eine wässrige Lösung, die Kristallisate der reinen Säure DTPMP gemäß der allgemeinen Formel (**I**), vorzugsweise in der *α*-Kristallmodifikation und/oder *β*-Kristallmodifikation und/oder *γ-*Kristallmodifikation, enthält.

Vorzugsweise ist eine wässrige Lösung im Sinne der Erfindung durch ein erfindungsgemäßes Verfahren erhältlich.

Optional kann eine wässrige Lösung, enthaltend Kristallisate in einer der erfindungsgemäßen Kristallmodifikationen, auch durch Suspendieren von Kristallisaten mindestens einer erfindungsgemäßen Kristallmodifikation in Wasser oder einer wasserhaltigen Lösung erhalten werden. Dies ist bspw. der Fall, wenn Kristallisate nach ihrer Abtrennung gewaschen oder für eine potentielle Anwendung der DTPMP in Wasser oder einer wasserhaltigen Lösung gelöst werden.

Es kann dabei auch vorgesehen sein, dass die Kristallisate der reinen Säure DTPMP in der *α*-Kristallmodifikation und/oder *β*-Kristallmodifikation und/oder *γ*-Kristallmodifikation zur Langzeitlagerung und/oder für den Transport in Wasser oder einer wasserhaltigen Lösung eingebracht werden.

Gegenstand der Erfindung ist auch die Verwendung eines erfindungsgemäßen Verfahrens zur Reinigung eines wässrigen Rohproduktes, enthaltend DTPMP in reiner Form mit einem Gesamtgehalt von mindestens 5 Ma.-%, bevorzugt zwischen 10 und 85 Ma.-%, besonders bevorzugt zwischen 20 und 80 Ma.-%.

Eine besonders vorteilhafte Verwendung des erfindungsgemäßen Verfahrens besteht darin, es direkt einem Herstellungsverfahren zur Synthese von DTPMP anzuschließen. Dabei wird dem erfindungsgemäßen Verfahren die zu reinigende wässrige Lösung, enthaltend DTPMP, direkt oder über einen Zwischenspeicher nach der letzten Umsetzungsstufe zugeführt. Nach einer besonders vorteilhaften Ausgestaltung des erfindungsgemäßen Verfahrens erfolgt die quasikontinuierliche Feststoffgewinnung in einem Rührkessel.

Bevorzugt wird ein erfindungsgemäßes Verfahren verwendet, um ein Kristallisat der reinen Säure DTPMP gemäß der allgemeinen Formel (I), vorzugsweise in der *α*-Kristallmodifikation und/oder *β*-Kristallmodifikation und/oder *γ-*Kristallmodifikation, mit einem Gesamtgehalt an DTPMP in reiner Form von mindestens 75 Ma.-%, bevorzugt mindestens 80 Ma.-%, bevorzugt im industriellen Maßstab herzustellen.

Ein durch das erfindungsgemäße Verfahren zur Feststoffgewinnung erhaltene Kristallisat kann direkt als Feststoff oder durch Lösen oder Suspendieren in Wasser oder einer wässrigen Lösung verwendet werden. Die Verwendungsform des Kristallisates hängt dabei von den Wünschen und Bedürfnissen des Formulierers am jeweiligen Einsatzort ab. Dabei kann vorgesehen sein, dass das erhaltene Kristallisat durch Sprühtrocknung, Agglomeration oder Pelletierung konfektioniert wird.

Anhand folgender Figuren und Ausführungsbeispiele soll die Erfindung näher erläutert werden, ohne die Erfindung auf diese zu beschränken.
- **Fig. 1:**: oben: ¹H-NMR von DTPMP Kristallisaten; unten: ³¹P-NMR von DTPMP Kristallisaten.
- **Fig. 2:**: Pulverdiffraktogramm von Kristallisaten der α-Kristallmodifikation.
- **Fig. 3:**: oben: Lichtmikroskopische Aufnahme von plättchenförmigen Kristallisaten der α-Kristallmodifikation; unten: REM Aufnahmen davon.
- **Fig. 4:**: Pulverdiffraktogramm von Kristallisaten der β-Kristallmodifikation.
- **Fig. 5:**: oben: Lichtmikroskopische Aufnahme von plättchenförmigen Kristallisaten der α-Kristallmodifikation; unten: REM Aufnahmen davon.
- **Fig. 6:**: berechnetes Pulverdiffraktogramm von Kristallisaten der γ-Kristallmodifikation.

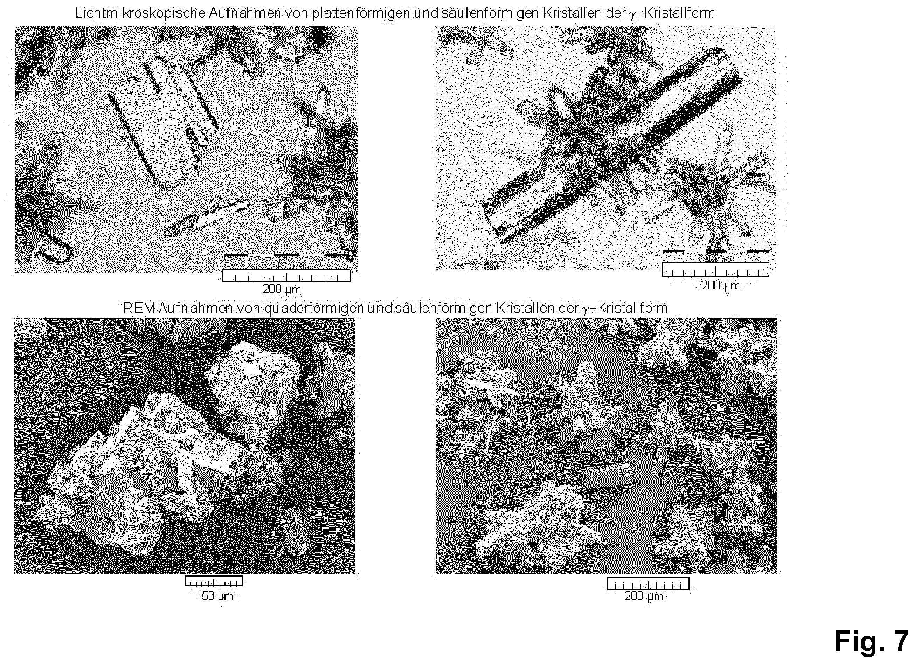

- **Fig. 7:**: oben: Lichtmikroskopische Aufnahme von plättchenförmigen Kristallisaten der χ-Kristallmodifikation; unten: REM Aufnahmen davon.

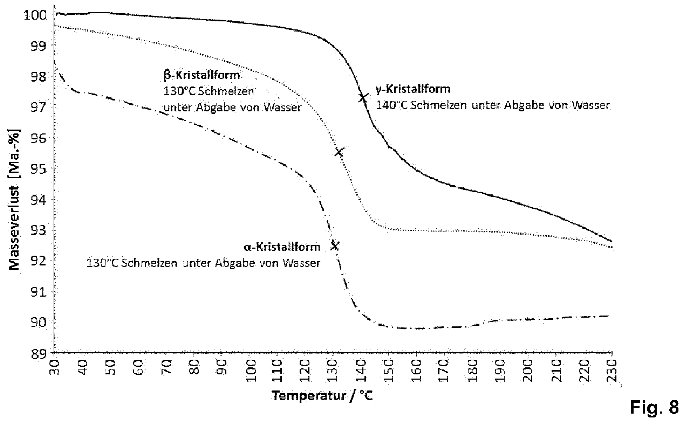

- **Fig. 8:**: Thermogravimetrie von Kristallisaten der *α-,* β- und γ-Kristallmodifikation.
- **Fig. 9:**: DSC/TG gekoppelter IR-Gasanalyse für die Ermittlung des Wassergehalts von DTPMP Kristallisaten.
- **Fig. 10:**: Reflexlagen von Kristallisaten der α*-,* β- und *γ*-Kristallmodifikation sowie der berechneten *γ*-Kristallmodifikation im Pulverdiffraktogramm mit rel. Intensitäten als Blasendurchmesser.
- **Fig. 11:**: Thermooptische Analyse der β-Kristallmodifikation; Aufheizregime: 120-140°C Heizrate 0,1 K / Minute; Heiztisch: Hot Stage FP82HT / Fa. Mettler Toledo, Software analySIS DOCU / Fa. Olympus Soft Imaging GmbH.
- **Fig. 12:**: Trocknungsverhalten von Kristallisaten in Abhängigkeit von Reinheit und Restfeuchte
- **Fig. 13:**: Löslichkeit der DTPMP bei Raumtemperatur in Abhängigkeit zur Konzentration an Natriumionen bzw. Chloridionen in Ma.-%.
- **Fig. 14:**: Wasseraufnahmevermögen der erfindungsgemäßen Kristallisate im Vergleich zu amorphen DTPMP-Feststoffen unterschiedlicher Qualitäten.
- **Fig. 15:**: Wasseraufnahmevermögen gereinigter DTPMP-Säure im Vergleich zu deren Natriumsalzen (Na₇-DTPMP, Na₃-DTPMP, Na_{0,5}-DTPMP)

### Beispiel 1 - isotherme Prozessführung

In einem doppelwandigem 5 l Rührreaktor mit 14 cm Ankerrührer wird eine Startmenge von 4,5 kg Slurry, enthaltend 40 Ma.-% DTPMP und 3 Ma.-% Chlorid in Wasser vorgelegt. Die Impfung erfolgte mit 0,2 kg Feststoff, enthaltend 85 Ma.-% DTPMP und 0,1 Ma.-% Chlorid mit einer Hauptpartikelgröße von 20 µm. Es resultiert eine berechnete Anfangstrübedichte von 4 Ma.-%. Das Ausrühren erfolgte bei einer konstanten Rührgeschwindigkeit von 150 U/min.

Während des quasikontinuierlichen Verfahrens wird ein Temperaturprofil festgelegt, wobei zunächst die Temperatur der wässrigen Lösung kontinuierlich über einen Zeitraum von 18 h auf eine Temperatur von 58°C erhöht wird, anschließend wird die Temperatur kontinuierlich über einen Zeitraum von 72 h um 1K pro 8 h auf eine Temperatur von 46°C abgekühlt und anschließend für 70 h konstant gehalten. Zu unterschiedlichen Zeitpunkten wurden Proben des Slurry entnommen und sowohl die Lösung als auch der suspendierte Feststoff auf ihre Gehalte an DTPMP bzw. Chlorid untersucht.

| **Versuchsdauer** | **Temperatur [°C]** | **Trübedichte [Ma.-%]** | **DTPMP Lösung [Ma.-%]** | **Chlorid Lösung [Ma.-%]** | **DTPMP Feststoff [Ma.-%]** | **Chlorid Feststoff [Ma.-%]** |
|---|---|---|---|---|---|---|
| 0,5 | 58 | 14 | 38,9 | 3,0 | 55,2 | 2,1 |
| 18 | 58 | 16 | 39,6 | 3,1 | 53,1 | 2,2 |
| 24 | 58 | 16 | 38,9 | 3,1 | 54,3 | 2,2 |
| 42 | 55 | 21 | 39,2 | 3,1 | 53,2 | 2,2 |
| 48 | 54 | 21 | 39,8 | 3,2 | 52 | 2,3 |
| 66 | 51 | 30 | 36,3 | 3,2 | 50,8 | 2,4 |
| 72 | 50 | 33 | 37,5 | 3,2 | 52,6 | 2,4 |
| 90 | 46 | 44 | 34,3 | 3,4 | 49,5 | 2,4 |
| 96 | 46 | 48 | 33,9 | 3,4 | 48,8 | 2,5 |
| 115 | 46 | 59 | 31,8 | 3,6 | 47,4 | 2,5 |
| 140 | 46 | 67 | 29,6 | 3,7 | 49 | 2,6 |
| 161 | 46 | 73 | 29 | 3,9 | 45,8 | 2,6 |

Die Stoffabtrennung des Kristallisates von der wässrigen Lösung erfolgt in einer Filterzentrifuge mit Lochtrommel bei einer Filterfläche von 235 cm² und bei einer Zentrifugationsgeschwindigkeit von 6500 U/min für 2 min. Diese Zentrifugationsgeschwindigkeit von 6500 U/min entspricht einer Trennleistung von 3500 g. Anschließend erfolgen drei Waschgänge mit Waschwasser (entsprechend der halben Feststoffmenge, diese aufgeteilt in 3 gleiche Teilmengen). Final erfolgt die Trocknung des abgetrennten Kristallisates für 5 min bei einer Zentrifugationsgeschwindigkeit von 10.000 U/min. Diese Zentrifugationsgeschwindigkeit von 10.000 U/min entspricht einer Trennleistung von 8.400 g.

Die Partikelgrößen der DTPMP-Kristallisate werden mit einem Laser Diffraction Particle Size Analyzer LS 13 320 / Fa. Beckmann Coulter bei einer Wellenlänge von 780 nm bestimmt.

| | |
|---|---|
| Mittelwert [µm] | 60 |
| d₁₀ [µm] | 17 |
| d₉₀ [µm] | 113 |

Zur Charakterisierung der Breite einer Partikelgrößenverteilung werden neben dem d₅₀-Wert noch der d₁₀- und der d₉₀-Wert herangezogen. Der d₅₀-Wert (Mittelwert) gibt dabei den mittlere Partikeldurchmesser an, d.h. das genau 50% der Partikel größer bzw. kleiner sind als der angegebene Partikeldurchmesser und wird im Folgenden Hauptpartikelgröße genannt. Mit dem d₁₀-Wert wird der Partikeldurchmesser bezeichnet, bei dem 10% der Partikel kleiner als dieser Grenzwert sind. Entsprechend gibt der d₉₀-Wert einen Partikeldurchmesser an, bei dem 90% der Partikel kleiner als der angegebene Grenzwert sind.

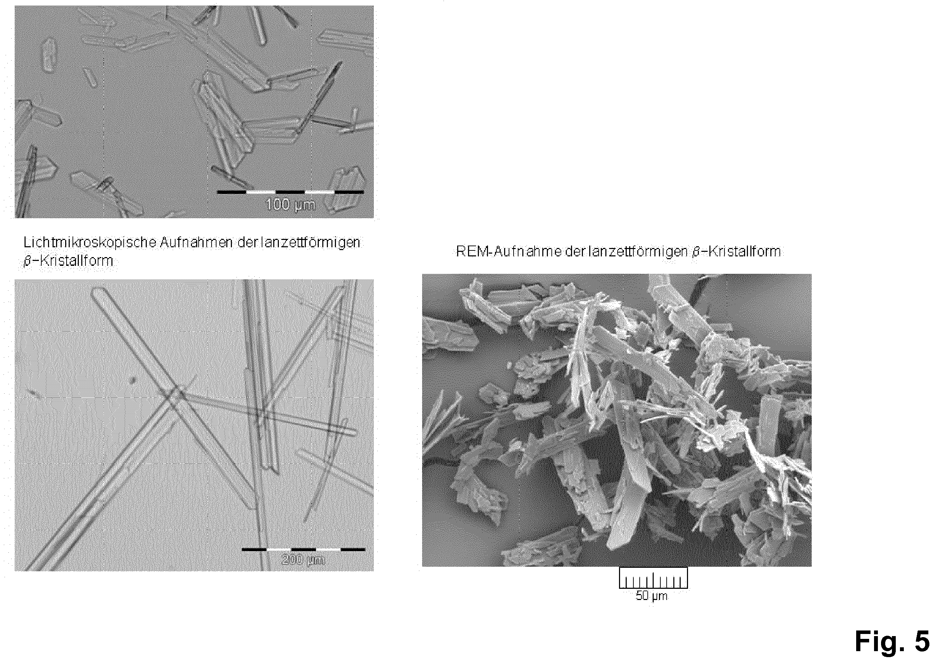

Die Kristallisate des isolierten Feststoffs weisen dabei eine Cutterform mit einer Kantenlänge von 50-120 *µ*m, einer Breite von 10-50 *µ*m und eine Dicke im Bereich zwischen 1-5 *µ*m auf vgl. Figur 5, Abbildung links oben).

Im Anschluss des Versuches wurden die Gehalte an DTPMP durch komplexometrische Titration und Chlorid durch argentometrische Titration in den einzelnen Komponenten ermittelt.

| | Anfallmenge bezogen auf Slurrymenge | DTPMP-Gehalt [Ma.-%] | Chlorid-Gehalt [Ma.-%] |
|---|---|---|---|
| Slurry | 4,5 [kg] | 40 | 3 |
| Feststoff ungewaschen | 34 [Ma.-%] | 83,6 | 0,6 |
| Feststoff gewaschen | 23 [Ma.-%] | 87,2 | 0,1 |
| | | | |
| Filtrat | 65 [Ma.-%] | 26,9 | 3,8 |
| Waschwasser | 29 [Ma.-%] | 12,1 | 1,5 |

### Beispiel 2 - kontinuierliche Prozessführung

Für die kontinuierliche Langzeitproduktion im Zustand über einen Gesamtzeitraum von 8 Wochen im Technikumsmaßstab wird in einem 10 l Rührreaktor mit 11 cm Propellerrührer eine Startmenge von 10 kg Slurry, enthaltend 40 Ma.-% DTPMP und 3 Ma.-% Chlorid in Wasser, vorgelegt. Die Impfung erfolgt einmalig durch das Einbringen von 2 kg Feststoff, enthaltend 85 Ma.-% DTPMP und 0,1 Ma.-% Chlorid sowie gekennzeichnet durch eine Hauptpartikelgröße von 35 µm. Es resultiert eine berechnete Anfangstrübedichte von 14 Ma.-%. Das Ausrühren erfolgt bei einer konstanten Temperatur von 40°C und einer konstanten Rührgeschwindigkeit von 280 U/min.

Während der quasikontinuierlichen Langzeitproduktion erfolgt alle 12 h die Entnahme von 2,5 kg Suspension, wobei die entnommene Menge durch Zugabe einer identischen Menge an frischer Suspension (40 Ma.-% DTPMP und 3 Ma.-% Chlorid in Wasser) ersetzt wird. In Abhängigkeit vom Zeitpunkt der Probennahmen beträgt die gravimetrisch, mittels Zentrifugation bei 6500 U/min / 2 Minuten, ermittelte Trübedichte 30-45%. Diese Zentrifugationsgeschwindigkeit von 6.500 U/min entspricht einer Trennleistung von 3.500 g.

Die Stoffabtrennung des Kristallisates von der Menge entnommenem Slurry erfolgt in einer Filterzentrifuge mit Lochtrommel mit einer Filterfläche von 235 cm² und bei einer Zentrifugationsgeschwindigkeit von 6500 U/min für 2 min. Diese Zentrifugationsgeschwindigkeit von 6500 U/min entspricht einer Trennleistung von 3500 g. Anschließend erfolgen drei Waschgänge mit Waschwasser (entsprechend der halben Feststoffmenge, diese aufgeteilt in 3 gleiche Teilmengen). Final erfolgt die Trocknung des abgetrennten Kristallisates für 5 min bei einer Zentrifugationsgeschwindigkeit von 10.000 U/min. Diese Zentrifugationsgeschwindigkeit von 10.000 U/min entspricht einer Trennleistung von 8.400 g.

Die Partikelgrößen der DTPMP-Kristallisate werden mit einem Laser Diffraction Particle Size Analyzer LS 13 320 / Fa. Beckmann Coulter bei einer Wellenlänge von 780 nm bestimmt. Die Kristallisate des isolierten Feststoffs weisen dabei eine Lanzettenform mit einer Kantenlänge von 50-100 *µ*m, einer Breite von 10-50 *µ*m und eine Dicke im Bereich zwischen 1-5 *µ*m auf (vgl. Figur 5; REM-Aufnahme)

| | |
|---|---|
| d₅₀ [µm] | 50 |
| d₁₀ [µm] | 10 |
| d₉₀ [µm] | 95 |

Im Anschluss des Versuches wurden die Gehalte an DTPMP und Chlorid analog zu Ausführungsbeispiel 1 in den einzelnen Komponenten ermittelt.

### Beispiel 3 - Einfluss von Impfung und Eintrag kinetischer Energie

Zur Bestimmung der Einflüsse von Impfung und Eintrag kinetischer Energie auf die Ausrührgeschwindigkeit und die Raumzeitausbeute (pro Kristallisationsvolumen und Zeit gebildete Kristallisatmenge) wurden die nachstehend aufgeführten Versuche wie folgt durchgeführt.

Ein in ein Stativ eingespanntes und zur Reduzierung von Verdunstungsverlusten mit einem durchbohrten Deckel versehenes 250 ml Schraubglas wurde mit einem über ein Rührwerk angetriebenen Propellerrührer mit 4 cm Rührorgan ausgestattet. Der Versuchsaufbau wurde bei Raumtemperatur in einem Abzug betrieben.

Als Slurry wurde eine wässrige Lösung mit 25 Ma.-% DTPMP eingesetzt. Die zur Herstellung des Slurries verwendete feste DTPMP-Säure wies bei Einwaage 49,6 Ma.-% DTPMP-Säure, einen Chloridgehalt von 1,7 Ma.-% und 0,2 Ma.-% Orthophosphat sowie eine Hauptpartikelgröße von 15 µm auf. Dieses Material wurde auch als Impfmaterial verwendet. Zur Impfung des Slurries wurde die für den Versuch vorgesehene Menge an fester DTPMP-Säure in wenigen Millilitern des Slurries zu einer Suspension aufgeschlämmt und mittels Pipette in das Ausrührgefäß gespült. Die Einsatzmenge wurde als g Impfstoff pro 100 g Slurry kalkuliert.

Der Fortschritt der Kristallisation wird durch wiederholende Messungen (It. nachfolgender Tabelle) des DTPMP-Gehaltes im Filtrat bestimmt.

Zur Bestimmung des im Slurry verbleibenden DTPMP-Gehaltes wurden Muster über einen 45 *µ*m Spritzenfilter genommen und mittels komplexometrischer Titration analysiert.

### Ergebnis:

Wie in nachfolgender Tabelle dargestellt, resultiert die Kombination aus hoher Rührgeschwindigkeit plus hoher Impfmaterialmenge in Versuch 1-1 in der schnellsten Verarmung der Mutterlauge und erzeugt damit pro Zeiteinheit die größte Ausbeute an Kristallisat.

Die Versuche 2-1 und 3-1 belegen hierbei, dass Rühren, d.h. der Eintrag kinetischer Energie, der dominierende Faktor ist. Bei konstant hoher Rührgeschwindigkeit zeigen die Versuche 1-1, 2-1 und 3-1 einen klaren Vorteil für die größeren Impfmaterialmengen.

| Versuch Nr. | 1-1 | 2-1 | 2-3 | 3-1 | 3-2 | 3-3 |
|---|---|---|---|---|---|---|
| Impfmenge [Ma.-%] | 5 | 0,5 | 0,5 | 0,1 | 0,1 | 0,1 |
| Resultierende Anfangstrübedichte [Ma.-%] | 2,4 | 0,25 | 0,25 | 0,05 | 0,05 | 0,05 |
| Rührung [U/min] | 160 | 160 | 0 | 160 | 40 | 0 |
| | | | | | | |

| Laufzeit [h] | DTPMP im Filtrat [Ma.-%] | DTPMP im Filtrat [Ma.-%] | DTPMP im Filtrat [Ma.-%] | DTPMP im Filtrat [Ma.-%] | DTPMP im Filtrat [Ma.-%] | DTPMP im Filtrat [Ma.-%] |
|---|---|---|---|---|---|---|
| 0 | 25,0 | 25,0 | 25,0 | 25,0 | 25,0 | 25,0 |
| 2 | | | 25,0 | | | |
| 4 | | | | | 23,6 | 23,6 |
| 15 | 7,5 | | | 18,4 | | |
| 16 | | 10,5 | | | | |
| 21 | | | 14,6 | | 17,1 | 19,8 |
| 23 | 7,5 | 8,8 | | 14,4 | | |
| 24 | | | | | 15,4 | 19,7 |
| 26 | | | 13,7 | | | |
| 28 | | | | | 13,9 | 19,6 |
| 39 | 7,1 | | | | | |
| 40 | | 7,4 | | 8,6 | | |
| 46 | | | | 8,6 | | |
| 47 | 7,5 | 7,4 | | | | |
| 63 | 6,9 | | | | | |
| 64 | | 7,2 | | 7,4 | | |
| 69 | | | 10,8 | | 7,7 | 17,8 |
| 71 | 6,9 | 7,6 | | 7,1 | | |
| 94 | | | | | | 17,1 |
| 99 | | | | | | 16,8 |
| 140 | | | | 6,7 | | |
| 165 | | | | | | 15,0 |

### Beispiel 4 - Verfahren zur Herstellung der γ-Kristallmodifikation, isotherm bei 70°C und 60°C

In einem doppelwandigen 3 l Rührreaktor mit 14 cm Ankerrührer wird eine Startmenge von 2 kg Slurry, enthaltend 55 Ma.-% DTPMP, 3,9 Ma.-% Chlorid und 0,7 Ma.-% *ortho*-Phosphat, vorgelegt. Die Impfung erfolgte einmalig mit 140 g (ca. 7 Ma.-%) Kristallisat der *γ*-Kristallmodifikation, aufweisend 82,5 Ma.-% DTPMP und 0,09 Ma.-% Chlorid sowie eine Hauptpartikelgröße von 50 *µ*m. Das Ausrühren erfolgte bei einer konstanten Rührgeschwindigkeit von 180 U/min.

Das quasikontinuierlich Verfahren wird isotherm über einen Zeitraum von 19 Tagen belassen. Zunächst wird die Kristallisation bei einer konstanten Anfangstemperatur von 70°C für 7 Tage belassen, anschließend wird die Temperatur auf 60°C verringert und über einen verbleibenden Zeitraum von 12 Tagen belassen. Die Abtrennung des gereiften Kristallisates von der wässrigen Lösung erfolgt in einer Filterzentrifuge mit Lochtrommel bei einer Filterfläche von 235 cm² und bei einer Zentrifugationsgeschwindigkeit von 6800 U/min für 2 min. Diese Zentrifugationsgeschwindigkeit von 6500 U/min entspricht einer Trennleistung von 3500 g. Anschließend erfolgen drei Waschgänge mit Waschwasser (entspricht halbe Feststoffmenge, diese aufgeteilt in 3 gleiche Teilmengen). Final erfolgt die Trocknung des abgetrennten Kristallisats für 5 min bei einer Zentrifugationsgeschwindigkeit von 10.000 U/min. Diese Zentrifugationsgeschwindigkeit von 10.000 U/min entspricht einer Trennleistung von 8.400 g.

Die Trübedichte, d.h. der Feststoffgehalt der Suspension in Ma.-% wird gravimetrisch über eine Tischzentrifuge in 12 ml Vials bei 6500 U/min ermittelt. Diese Zentrifugationsgeschwindigkeit von 6500 U/min entspricht einer Trennleistung von 3500 g.

### Analysenwerte bei isothermer Prozessführung von 70°C:

| | Gehalt DTPMP [Ma.-%] | Gehalt Chlorid [Ma.-%] | Anteil Chlorid an DTPMP [Ma.-%] | Menge [g] |
|---|---|---|---|---|
| Filtrat | 49,8 | 2,69 | 5,2 | 789 |
| Feststoff ungewaschen | 90,9 | 0,28 | 0,31 | 1290 |
| Feststoff gewaschen | 93,8 | 0,06 | 0,06 | 941 |

### Analysenwerte bei isothermer Prozessführung von 60°C:

| | Gehalt DTPMP [Ma.-%] | Gehalt Chlorid [Ma.-%] | Anteil Chlorid an DTPMP [Ma.-%] | Menge / [g] |
|---|---|---|---|---|
| Filtrat | 48,7 | 2,94 | 6,03 | 511 |
| Feststoff ungewaschen | 89,8 | 0,4 | 0,45 | 1470 |
| Feststoff gewaschen | 92,8 | 0,03 | 0,03 | 895 |

Anschließend wird die Partikelgröße der DTPMP-Kristallisate mit einem Laser Diffraction Particle Size Analyzer LS 13 320 / Fa. Beckmann Coulter bei einer Wellenlänge von 780 nm bestimmt. Die durchschnittliche Wachstumsrate (in [µm/h]) der Kristallisate wurde für eine isotherme Prozessführung bei 70°C mit 0,15 ermittelt.

| | Start | Ende |
|---|---|---|
| d₅₀ [µm] | 50 | 68 |
| d₁₀ [µm] | 22 | 39 |
| d₉₀ [µm] | 88 | 103 |

Zur Charakterisierung der Breite einer Partikelgrößenverteilung werden neben dem d₅₀-Wert zusätzlich der d₁₀- und der d₉₀-Wert herangezogen. Der d₅₀-Wert (Mittelwert) gibt dabei den mittlere Partikeldurchmesser an, d.h. das genau 50% der Partikel größer bzw. kleiner sind als der angegebene Partikeldurchmesser und wird im Folgenden Hauptpartikelgröße genannt. Mit dem d₁₀-Wert wird der Partikeldurchmesser bezeichnet, bei dem 10% der Partikel kleiner als dieser Grenzwert sind. Entsprechend gibt der d₉₀-Wert einen Partikeldurchmesser an, bei dem 90% der Partikel kleiner als der angegebene Grenzwert sind.

Beide Versuche, 60°C und 70°C, zur Gewinnung der *γ*-Kristallmodifikation liefern vorteilhaft auf Grund der geringen spezifischen Oberfläche von Kristallisaten der *γ*-Kristallmodifikation selbst ohne Waschung sehr saubere Feststoffe, welche durch die geringen Restfeuchten von < 10 Ma.-% deutlich effizienter zu trocknen sind als dies bei den anderen Kristallformen der Fall ist. Bei Waschung des Filterkuchens von Kristallisaten der *γ*-Kristallmodifikation analog den Beispielen 5 und 6 lassen sich Restfeuchte und Verunreinigungen vorteilhaft weiter reduzieren.

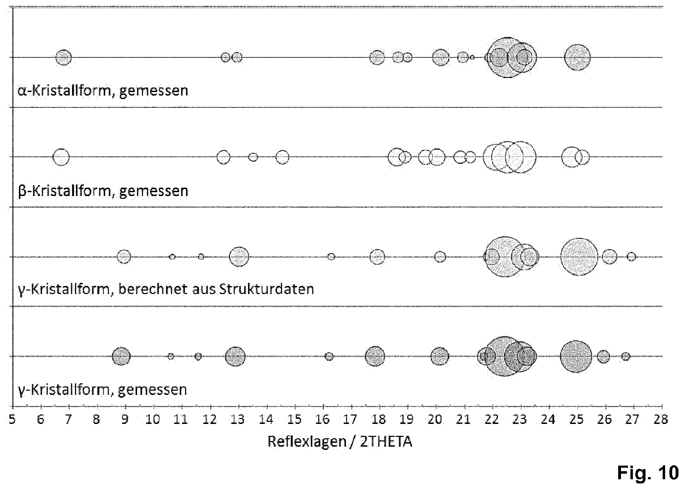

Das aus den Strukturdaten einer Einkristallstrukturanalyse der *γ*-Kristallmodifikation mittels der Software PowderCell (Bundesanstalt für Materialforschung - und prüfung Berlin) berechneter Pulverdiffraktogramm ist in Figur 6 dargestellt, wobei die charakteristischen Reflexe Tabelle 3 entnehmbar sind. Zur Strukturlösung wurde das Einkristall-Röntgendiffraktometer IPDS 2T (Stoe) verwendet. Ein Vergleich der Reflexlagen in Figur 10 zwischen dem berechneten und dem gemessenen Pulverdiffraktrogramm belegt die Abwesenheit einer anderen Kristallmodifikation.

**Tabelle 3: Charakteristische Reflexe von Kristallisaten der γ-Kristallmodifikation.**

| *γ-*Kristallmodifikation | | |
|---|---|---|
| 2Θ | d | rel. Intensität |
| 8,939 | 9,8849 | 33,80% |
| 10,652 | 8,2986 | 12,80% |
| 11,673 | 7,5753 | 13,50% |
| 13,008 | 6,8005 | 48,10% |
| 16,280 | 5,4403 | 16,40% |
| 17,914 | 4,9476 | 37,20% |
| 20,128 | 4,408 | 27,70% |
| 21,768 | 4,0794 | 17,00% |
| 21,960 | 4,0443 | 39,20% |
| 22,432 | 3,9602 | 100,00% |
| 23,113 | 3,845 | 64,40% |
| 23,311 | 3,8128 | 44,90% |
| 25,058 | 3,5508 | 92,60% |
| 26,131 | 3,4074 | 36,00% |
| 26,909 | 3,3107 | 20,50% |

### Beispiel 5 - Verfahren zur Herstellung der α-Kristallmodifikation

In einer Pilotanlage mit einem 10 l Rührreaktor und 11 cm Propellerrührer wird eine Startmenge von 24,3 kg Slurry, wie in nachstehender Tabelle aufgeführt, vorgelegt. Die Impfung erfolgt mit 2,4 kg Ma.-% DTPMP Kristallisaten der α-Kristallmodifikation, aufweisend 50 Ma.-% DTPMP, 1,5 Ma.-% Chlorid sowie einer Hauptpartikelgröße von 20 µm, bei einer Reaktionstemperatur von 30°C. Es resultiert eine berechnete Anfangstrübedichte von 5 Ma.-%. Das Ausrühren erfolgte bei einer konstanten Rührgeschwindigkeit von 170 U/min.

Die Trübedichte, d.h. der Feststoffgehalt der Suspension in Ma.-% wird gravimetrisch über eine Tischzentrifuge in 12 ml Vials bei 6500 U/min / 5 Minuten ermittelt. Diese Zentrifugationsgeschwindigkeit von 6500 U/min entspricht einer Trennleistung von 3500 g.

Nach einer Versuchsdauer von 15,5 h wird der Feststoff von der Flüssigkeit über eine Porzellannutsche (50 mbar, auf Filterpapier) abgetrennt, wobei der ungewaschene Feststoff und das Filtrat die in der nachstehenden Tabelle aufgeführten Gehalte an DTPMP, Chlorid und ortho-Phosphat aufweisen.

| | Menge [kg] | Gehalt DTPMP [Ma.-%] | Gehalt Chlorid [Ma.-%] | Anteil Chlorid an DTPMP [Ma.-%] | Gehalt ortho-Phosphat [Ma.-%] |
|---|---|---|---|---|---|
| Slurry | 24,3 | 46,5 | 3,3 | 7,1 | 0,6 |
| Feststoff ungewaschen | 8,5 | 59,5 | 2,6 | 4,4 | 0,4 |
| Filtrat: | 15,8 | 32,8 | 3,8 | 11,6 | 0,5 |

Mit zunehmender Trübedichte reiben die dünnen Kristallplättchen immer mehr aneinander und werden dabei mechanisch zerstört. Dies führt zu neuen Keimen, wodurch sich bei deren Ausheilung die Trübedichte weiter erhöht. Als Resultat beobachtet man kein weiteres, signifikantes Kristallwachstum, sondern die Kristalle verbleiben bei Kristallgrößen um 20 µm. Diese geringen Kristallgrößen, verbunden mit der für Kristallform A typischen Plättchenform resultieren in hohen spezifischen Oberflächen. Dies führt zu extrem hohen Restfeuchten und Waschverlusten.

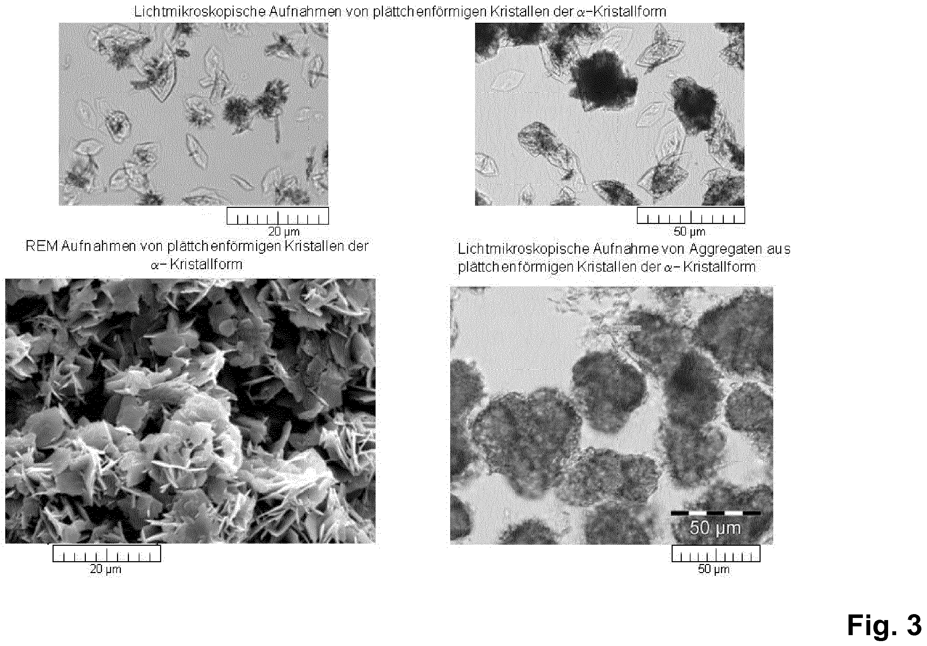

Das mittels Laserbeugung im makroskopischen Maßstab zu beobachtende Kornwachstum erfolgt primär über den Aufbau von Agglomeraten (vgl. Figur 3, rechtes, unteres Bild), welche mittels Rasterelektronenmikroskop optisch erkennbar sind. Obwohl die Agglomeration das Sedimentations- und damit auch das Filtrationsverhalten günstig beeinflusst, verringert der Einschluss von Mutterlauge den Reinigungseffekt.

Sinnvoll erweist sich hier ein zweistufiger Prozess. Der in der ersten Stufe ausgefällte und durch Filtration getrennte Feststoff wird dabei ohne Waschung wieder aufgelöst und in einem zweiten Schritt in einer nunmehr reineren Mutterlauge, welche auf Grund ihrer höheren Reinheit vorteilhaft weniger übersättigt, umkristallisiert. Dieser Feststoff wird nach der Filtration gewaschen und zeigt eine signifikant bessere Aufreinigung. Nachteilig bleibt jedoch der hohe Gehalt an Restfeuchte von > 60Ma.-%. Soll dieses Material energieeffizient bei Temperaturen > 60°C getrocknet werden, aggregiert es durch Aufrollen oder beginnt sich sogar in der anhaftenden Restfeuchte zu lösen. Um dem entgegenzuwirken, muss vorab mit deutlich geringeren Energieeinträgen, d.h. bei Temperaturen von ca. 40°C auf Restfeuchten < 40 Ma.-.% getrocknet werden.

Diese Abhängigkeit wird durch das nachfolgende Beispiel zur Bestimmung des Trocknungsverhaltens von Kristallisaten in Abhängigkeit von Restfeuchte und Produktreinheit gezeigt.

Ein durch Umkristallisation isolierter DTPMP-Feststoff ist durch Reste anhaftender Mutterlauge über die in nachfolgender Tabelle aufgeführten Qualitätsparameter charakterisiert. Die Bestimmung der Restfeuchte mittels Halogentrockner HB 43 S / Fa. Mettler Toledo erfolgt isotherm bei der jeweils angegebenen Temperatur unter Verwendung des Abschaltkriteriums 4 (AK4 = mittlere Gewichtsabnahme ist < 1 mg pro 90 Sekunden):

| | DTPMP [Ma.-%] | Chlorid [Ma.-%] | PO4 anorg [Ma.-%] | H3PO3 [Ma.-%] | Restfeuchte 130°C AK 4 |
|---|---|---|---|---|---|
| ungewaschenes Muster | 47,7 | 1,8 | 0,13 | 3 | 45,6 |

Nach einem Reinigungsschritt, welcher aus Aufschlämmung des Feststoffes in Wasser und nachfolgender Abtrennung mittels Filterzentrifuge besteht, ergeben sich folgende Qualitätsparameter:

| | DTPMP [Ma.-%] | Chlorid [Ma.-%] | PO4 anorg [Ma.-%] | H3PO3 [Ma.-%] | Restfeuchte 130°C AK 4 |
|---|---|---|---|---|---|
| gewaschenes Muster | 50,9 | 0,7 | 0,15 | 1,5 | 44,8 |

Diesen Feststoffproben wird in einem Rotationsverdampfer bei 40°C und 5 mbar Vakuum schrittweise die anhaftende Restfeuchte entzogen, so dass von jedem der beiden Reinheitsgrade (ungewaschen und gewaschen) eine Serie von Mustern mit abnehmender Restfeuchter bereitgestellt wird.

| Nr. ungewaschene Muster | Restfeuchte [Ma.-%] | Nr. ungewaschene Muster | Restfeuchte [Ma.-%] |
|---|---|---|---|
| 1 | 53 | 1 | 51 |
| 2 | 47 | 2 | 47 |
| 3 | 36 | 3 | 40 |
| 4 | 32 | 4 | 36 |
| 5 | 26 | 5 | 31 |
| 6 | 14 | 6 | 24 |
| 7 | 11 | 7 | 19 |

Mit diesem Probematerial werden 4 ml Borosilicatvials befüllt und ein Füllstand von 2/3 der Glashöhe durch leichtes Anklopfen eingestellt. Zur Minimierung von Verdunstungsverlusten werden dieSchraubdeckel eines jeden Vials zusätzlich mit einer Polyethylenfolie abgedichtet. Alle Proben werden parallel in einem Temperierblock auf einem Heiz-Kühlschüttler ThermoTwister comfort / Fa. Quantifoil Instruments GmbH für eine definierte Zeit bei einer definierten Temperatur geschüttelt und anschließend visuell bewertet. Die Einteilung erfolgt nach folgendem Punktesystem:
5 Punkte = Probe unverändert
4 Punkte = Probe kompaktiert / angelöst
3 Punkte = Probe sichtbar angelöst
2 Punkte = Probe trübe hochviskose Lösung
1 Punkt = Probe klar gelöst

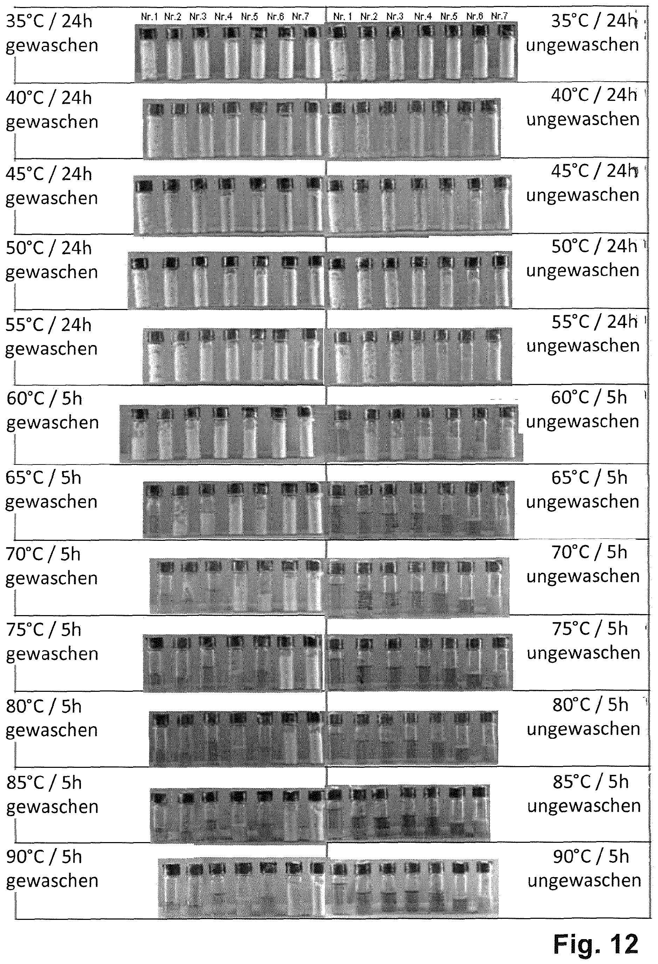

Die nachfolgenden zwei Tabellen fassen die jeweils zum Ende einer Temperierstufe gemachten Beobachtungen zusammen, angefertigte Fotos (vgl. Figur 12) vervollständigen den Überblick.

**Tabelle der Muster ungewaschener Qualität:**

| | | | | | | | | | | | | |
|---|---|---|---|---|---|---|---|---|---|---|---|---|
| Versuchsdauer [h] | 24 | 24 | 24 | 24 | 24 | 24 | 5 | 5 | 5 | 5 | 5 | 5 |
| Temperatur [°C] | 35 | 40 | 45 | 50 | 55 | 60 | 65 | 70 | 75 | 80 | 85 | 90 |
| 51 [Ma.-%] Restfeuchte | 5 | 5 | 5 | 5 | 5 | 2 | 1 | 1 | 1 | 1 | 1 | 1 |
| 47 [Ma.-%] Restfeuchte | 5 | 5 | 5 | 5 | 5 | 3 | 1 | 1 | 1 | 1 | 1 | 1 |
| 40 [Ma.-%] Restfeuchte | 5 | 5 | 5 | 5 | 5 | 3 | 1 | 1 | 1 | 1 | 1 | 1 |
| 36 [Ma.-%] Restfeuchte | 5 | 5 | 5 | 5 | 5 | 3 | 1 | 1 | 1 | 1 | 1 | 1 |
| 31 [Ma.-%] Restfeuchte | 5 | 5 | 5 | 5 | 4 | 3 | 1 | 1 | 1 | 1 | 1 | 1 |
| 24 [Ma.-%] Restfeuchte | 5 | 5 | 5 | 4 | 4 | 3 | 2 | 1 | 1 | 1 | 1 | 1 |
| 19 [Ma.-%] Restfeuchte | 5 | 5 | 5 | 5 | 5 | 4 | 2 | 2 | 2 | 2 | 2 | 2 |

**Tabelle der Muster "gewaschene Qualität":**

| | | | | | | | | | | | | |
|---|---|---|---|---|---|---|---|---|---|---|---|---|
| Versuchsdauer [h] | 24 | 24 | 24 | 24 | 24 | 24 | 5 | 5 | 5 | 5 | 5 | 5 |
| Temperatur [°C] | 35 | 40 | 45 | 50 | 55 | 60 | 65 | 70 | 75 | 80 | 85 | 90 |
| 53 [Ma.-%] Restfeuchte | 5 | 5 | 5 | 5 | 5 | 3 | 1 | 1 | 1 | 1 | 1 | 1 |
| 47 [Ma.-%] Restfeuchte | 5 | 5 | 5 | 5 | 5 | 5 | 3 | 1 | 1 | 1 | 1 | 1 |
| 36 [Ma.-%] Restfeuchte | 5 | 5 | 5 | 5 | 5 | 5 | 3 | 1 | 1 | 1 | 1 | 1 |
| 32 [Ma.-%] Restfeuchte | 5 | 5 | 5 | 5 | 5 | 5 | 4 | 3 | 3 | 2 | 2 | 2 |
| 26 [Ma.-%] Restfeuchte | 5 | 5 | 5 | 5 | 5 | 5 | 4 | 3 | 3 | 2 | 2 | 2 |
| 14 [Ma.-%] Restfeuchte | 5 | 5 | 5 | 5 | 5 | 5 | 5 | 5 | 5 | 5 | 5 | 5 |
| 11 [Ma.-%] Restfeuchte | 5 | 5 | 5 | 5 | 5 | 5 | 5 | 5 | 5 | 5 | 5 | 5 |

Die am Ende einer jeden Temperierstufe angefertigten Fotos der Muster zeigen sehr deutlich, dass Muster mit hohen Restfeuchten und gleichzeitig geringer Reinheit bereits bei niedrigen Temperaturen kompaktieren und sich partiell oder sogar vollständig in der eigenen Restfeuchte lösen. Diese Eigenschaft erschwert eine ökonomische Prozessführung, also hohe Produktausbeuten durch Eintrag von viel Trocknungsenergie, signifikant.

Vorteilhaft bezüglich ihres Trocknungsverhaltens erweisen sich dagegen DTPMP-Feststoffqualitäten mit weniger als 0,7% Chlorid und weniger als 40% Restfeuchte.

Das mit Cu-K_{α}1-Strahlung aufgenommene Röntgenbeugungsdiagramm der erfindungsgemäßen *α*-Kristallmodifikation ist in Figur 2 dargestellt, wobei die charakteristischen Reflexe Tabelle 1 entnehmbar sind, und belegt die Abwesenheit einer anderen Kristallmodifikation. Zur Aufnahme des Röntgenbeugungsdiagramms wurde das hochauflösende Röntgendiffraktometer D8 Discover (Bruker) verwendet.

**Tabelle 1: Charakteristische Reflexe von Kristallisaten der α-Kristallmodifikation.**

| 2Θ | d | rel. Intensität |
|---|---|---|
| 6,796 | 12,99626 | 38,00% |
| 12,534 | 7,05661 | 21,70% |
| 12,937 | 6,83779 | 24,10% |
| 17,9 | 4,9513 | 35,60% |
| 18,641 | 4,75618 | 26,50% |
| 18,981 | 4,67183 | 22,00% |
| 20,152 | 4,40287 | 41,00% |
| 20,94 | 4,23896 | 27,60% |
| 21,276 | 4,17267 | 10,20% |
| 21,854 | 4,06371 | 21,30% |
| 22,229 | 3,99591 | 45,80% |
| 22,52 | 3,94501 | 100,00% |
| 23,031 | 3,85863 | 72,60% |
| 23,119 | 3,84415 | 39,10% |
| 25 | 3,55902 | 64,30% |

### Beispiel 6 - Verfahren zur Herstellung der β-Kristallmodifikation

In einem doppelwandigen 5 l Rührreaktor und 14 cm Ankerrührer wird eine Startmenge von 4,49 kg Slurry, enthaltend 38,9 Ma.-% DTPMP und 3,0 Ma.-% Chlorid, vorgelegt. Die Impfung erfolgte einmalig mit 0,2 kg Kristallisat der *β*-Kristallmodifikation, aufweisend 85 Ma.-DTPMP und 0,1 Ma.-% Chlorid sowie einer Hauptpartikelgröße von 30 µm. Es resultiert eine berechnete Anfangstrübedichte von 3,6 Ma.-%. Das Ausrühren erfolgte bei einer konstanten Rührgeschwindigkeit von 150 U/min.

Das Verfahren wird isotherm über einen Zeitraum von 3 Tagen belassen. Zunächst wird die Kristallisation bei einer konstanten Anfangstemperatur von 58°C für 24 h belassen, anschließend wird die Temperatur kontinuierlich mit einem Temperaturprofil von ca. 1 K pro 6 h auf 46°C verringert und über einen verbleibenden Zeitraum von 71 h belassen. Die Abtrennung des gereiften Kristallisates von der wässrigen Lösung erfolgt in einer Filterzentrifuge mit Lochtrommel bei einer Filterfläche von 235 cm² und bei einer Zentrifugationsgeschwindigkeit von 6800 U/min für 2 min. Diese Zentrifugationsgeschwindigkeit von 6500 U/min entspricht einer Trennleistung von 3.500 g. Anschließend erfolgen drei Waschgänge mit Waschwasser (entspricht halbe Feststoffmenge, diese aufgeteilt in 3 gleiche Teilmengen). Final erfolgt die Trocknung des abgetrennten Kristallisates für 5 min bei einer Zentrifugationsgeschwindigkeit von 10.000 U/min. Diese Zentrifugationsgeschwindigkeit von 10.000 U/min entspricht einer Trennleistung von 8.400 g.

| | Menge [g] | DTPMP [Ma.-%] | Chlorid [Ma.-%] | Chlorid in DTPMP [Ma.-%] |
|---|---|---|---|---|
| Slurry | 4492 | 38,9 | 3,0 | 7,7 |
| Feststoff ungewaschen | 1509 | 83,6 | 0,6 | 0,7 |
| Feststoff 1 x gewaschen | | 85,4 | 0,36 | 0,4 |
| Feststoff 2 x gewaschen | | 86,0 | 0,3 | 0,4 |
| Feststoff 3 x gewaschen | 1017 | 87,2 | 0,09 | 0,1 |
| Filtrat: | 2915 | 26,9 | 3,8 | 14,1 |
| Waschwasser: | 1312 | 12,1 | 1,54 | 12,7 |

Anschließend wird die Partikelgröße der DTPMP-Kristallisate mit einem Laser Diffraction Particle Size Analyzer LS 13 320 / Fa. Beckmann Coulter bei einer Wellenlänge von 780 nm bestimmt.

| | Ende |
|---|---|
| d₅₀ [µm] | 60 |
| d₁₀ [µm] | 17 |
| d₉₀ [µm] | 113 |

Die Ermittlung der durchschnittlichen Partikelgröße zu Versuchsende erfolgt mittels Mikroskop und Visualisierungssoftware Olympus (vgl. Figur 5):

| | |
|---|---|
| Länge [µm] | 50-120 |
| Breite [µm] | 10-50 |
| Dicke [µm]: | 1-5 |

Kristallisate der *β*-Kristallmodifikation lassen sich über einen weiten Temperaturbereich mit vergleichbaren Ausbeuten und Aufreinigungsgraden gewinnen. Kühlkristallisation erfordert zur Vermeidung von Übersättigung geringe Kühlraten. Ein isothermer Abbau von Übersättigung ist sowohl im oberen Existenzbereich der *β*-Kristallmodifikation als auch im unteren Existenzbereich der *β*-Kristallmodifikation möglich.

Das mit Cu-K_{α}1-Strahlung aufgenommene Röntgenbeugungsdiagramm der erfindungsgemäßen *β*-Kristallmodifikation ist in Figur 4 dargestellt, wobei die charakteristischen Reflexe Tabelle 2 entnehmbar sind, und belegt die Abwesenheit einer anderen Kristallmodifikation. Zur Aufnahme des Röntgenbeugungsdiagramms wurde das hochauflösende Röntgendiffraktometer D8 Discover (Bruker) verwendet.

**Tabelle 2: Charakteristische Reflexe von Kristallisaten der β-Kristallmodifikation.**

| 2Θ | d | rel. Intensität |
|---|---|---|
| 6,707 | 13,1694 | 41,30% |
| 12,464 | 7,09618 | 33,30% |
| 13,512 | 6,54779 | 22,10% |
| 14,553 | 6,08179 | 32,50% |
| 18,596 | 4,76749 | 43,80% |
| 18,894 | 4,69305 | 29,40% |
| 19,614 | 4,52231 | 36,50% |
| 20,02 | 4,43159 | 39,80% |
| 20,854 | 4,25612 | 32,00% |
| 21,204 | 4,18675 | 27,70% |
| 22,12 | 4,01534 | 65,10% |
| 22,522 | 3,94466 | 79,10% |
| 22,988 | 3,86569 | 76,80% |
| 24,8 | 3,58726 | 50,60% |
| 25,166 | 3,53581 | 35,70% |

### Beispiel 7 - Thermoanalyse der Kristalle

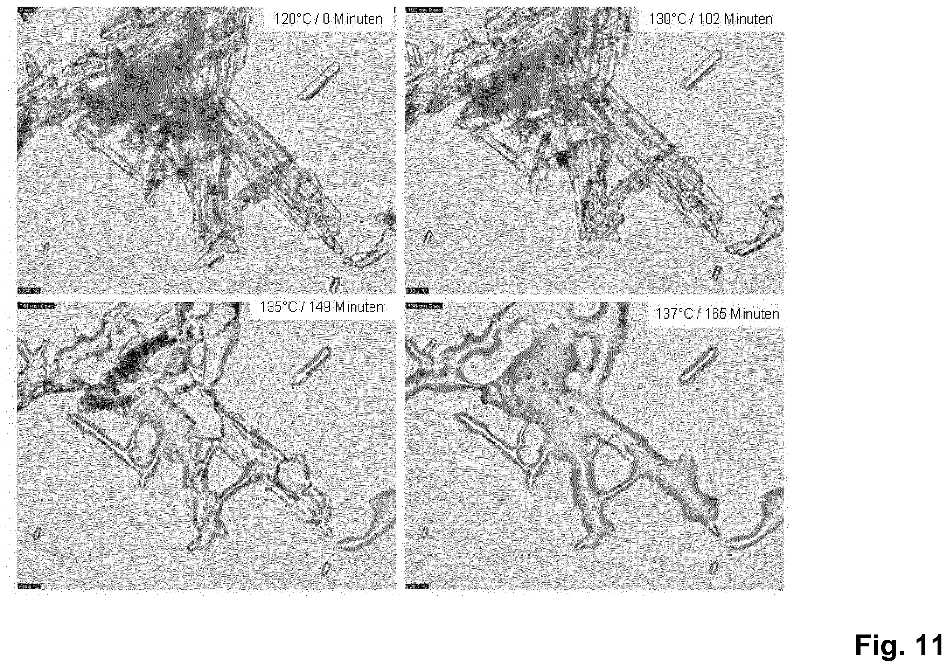

Im Trockenschrank werden Kristallisate der *α-, β*- und *γ*-Kristallmodifikation bei 80°C für 24 Stunden auf Restfeuchten <10 Ma.-% vorgetrocknet. Die thermogravimetrische Analyse erfolgt durch Probenvorlage in einem Platintiegel bei einem Aufheizregime von 30°C bis 230°C mit einer konstanten Heizrate von 1,0 K/min in einem TG/DTA 220 (Fa. Seiko Instruments). Thermooptisch ist ein Schmelzen der Proben im Temperaurbereich zwischen 130 und 140°C erkennbar (Figur 11), wobei der Schmelzbeginn von Kristallisaten der α-Kristallmodifikation bei 130°C liegt, β-Kristallmodifikation bei 135°C schmilzt und bei Kristallisaten der γ-Kristallmodifikation das Schmelzen bei 140°C beginnt. Vorteilhaft kann damit die γ-Kristallmodifikation unter Beibehaltung des festen Aggregatzustandes mit höheren Energieeinträgen und damit energieeffizienter als Kristallisate der α- bzw. β-Kristallmodifikation getrocknet werden.

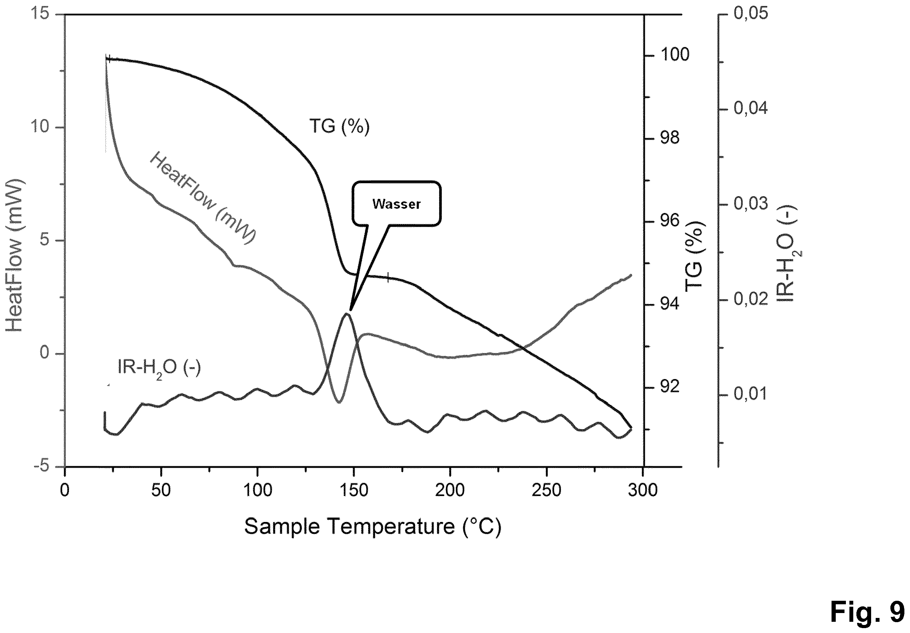

Mittels DSC/TG gekoppelter IR-Gasanalyse (Figur 9) lässt sich der beim Schmelzen auftretende Masseverlust von 3-5 Ma.-% Wasser zuordnen. Diese Wassermenge entspricht einer Stoffmenge von 1 mol Wasser pro mol DTPMP zuzüglich einer vernachlässigbaren Menge von Haftwasser oberflächlich angelagerter Restfeuchte. Die Analyse ist der Beleg, dass ein Kristallisat DTPMP in Form des kristallinen Monohydrats der Säure DTPMP vorliegt.

### Beispiel 8 - Bestimmung der Hygroskopizität

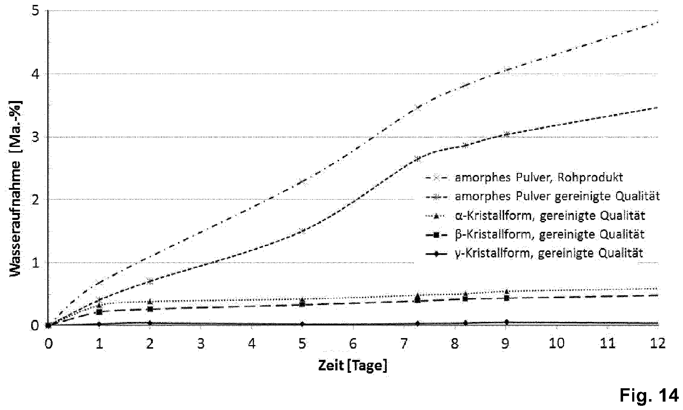

Zur Bestimmung der Hygroskopizität wurden Feststoffproben in 25 ml Bechergläsern in einem Exsikkator unter konstanter Luftfeuchte gelagert. Über einer gesättigten Magnesiumnitratlösung mit Bodenkörper (ca. 1/3 Bodenkörper in 2/3 der Lösung) stellt sich bei 22 ± 2°C eine relative Luftfeuchte von 55 Ma.-% ein. Die Wasseraufnahme der Proben wurde als Massedifferenz gravimetrisch über einen Zeitraum von 12 Tagen einmal täglich bestimmt (*vgl.* Figur 14).

Vergleichend zu Kristallisatproben der Kristallisate der *α-, β*- und *γ*-Kristallmodifikation wurden zwei sprühgetrocknetes Pulver getestet.

Ein als Ausgangsslurry für die Kristallisation eingesetztes DTPMP-Syntheseprodukt mit den Qualitätsparametern aus Tabelle 4 wurde mit einem Büchi-Mini Spray Dryer B-290 sprühgetrocknet.

Das zweite sprühgetrocknete Pulver wurde aus wieder aufgelöstem Kristallisat der *α-*Kristallmodifikation gewonnen und zeigte damit den gleichen geringen Verunreinigungsgrad wie das Kristallisat der *α*-Kristallmodifikation.

Die Zusammensetzung der verwendeten Muster und die relative Wasseraufnahme [in Ma.-%] ist der nachstehenden Tabelle 4 entnehmbar.

**Tabelle 4:**

| | **Summe (H3PO4 + H3PO3) / DTPMP** | **Chlorid / DTPMP** | **Schüttdichte** | **relative Was seraufnahme** |
|---|---|---|---|---|
| Produkt | Ma.-% | Ma.-% | [g/ml] | Ma.-% / Tag |
| amorphes Pulver aus Sprühtrocknung eines ungereinigten DTPMP-Syntheseproduktes | 6,5 | 3,5 | 0,27 | 0,40 |
| amorphes Pulver aus Sprühtrockung einer durch Umkristallisation gereinigten DTPMP-Säure | 3,3 | 1,3 | 0,27 | 0,29 |
| Kristallform A , gereinigte Qualität | 3,3 | 1,3 | 0,36 | 0,03 |
| Kristallform B, gereinigte Qualität | 1,1 | 0,3 | 0,49 | 0,04 |
| Kristallform C, gereinigte Qualität | 0,95 | 0,05 | 0,59 | 0,003 |

Bereits nach kurzer Zeit ist eine klare Differenzierung möglich. Die größte Hygroskopizität weisen sprühgetrocknete Pulver des ungereinigten DTPMP-Syntheseproduktes (amorphe Struktur) auf. Die durch Umkristallisation gereinigte und sprühgetrocknete Qualität der DTPMP (amorphe Struktur) weist bei gleicher sehr hoher spezifischer Oberfläche ein geringeres Wasseraufnahmevermögen auf, als das ungereinigte Rohprodukt.

Demgegenüber zeichnen sich die erfindungsgemäßen Kristallisate der Kristallmodifikation α, β oder γ durch eine gleichbleibend geringe Wasseraufnahme auf, wobei die Kristallform γ mit Abstand die geringste Hygroskopzität zeigt. Dies scheint in der kompakten, quaderförmigen Kristallform begründet, welche einen hohen Reinigungserfolg und geringe Hygroskopizität zur Folge hat.

### Beispiel 9 - Hygroskopizität von Säure und Salzen

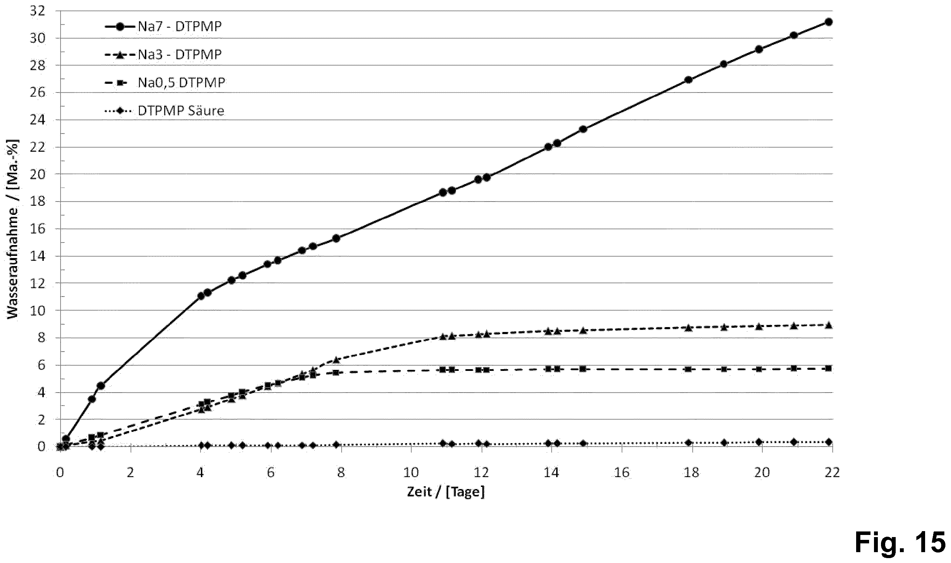

In einem weiteren Versuch wurde der Einfluss des Neutralisationsgrades der Phosphonsäure DTPMP, auf die Hygroskopizität untersucht, aufgrund ihrer industriellen Relevanz speziell der Natriumsalze. Hierzu wurden jeweils 10 g Probe in vier gleichgroße Kristallisierschalen in einem Exsikkator unter konstanter Luftfeuchte gelagert. Über einer gesättigten Magnesiumnitratlösung mit Bodenkörper (ca. 1/3 Bodenkörper in 2/3 der Lösung) stellen sich bei 22°C ca. 55 Ma.-% relative Luftfeuchte ein. Die Wasseraufnahme der Proben wurde als Massedifferenz über einen Zeitraum von 22 Tagen gravimetrisch zweimal täglich bestimmt (*vgl.* Figur 15).

Ein Kristallisat der *α*-Kristallmodifikation mit einem Fremdsäuregehalt von 3,8 Ma.-% Chlorid und in Summe 6,6 Ma.-% H₃PO₄ und H₃PO₃ pro 100 Ma.-% DTPMP wurde wieder aufgelöst. Teilmengen wurden mit Natronlauge anneutralisiert auf pH (1%ig) = 1,7 für das Na_{0,5}-DTPMP Salz, pH (1%ig) = 2,1 für das Na₃-DTPMP Salz und pH (1%ig) = 6,6 für das Na₇-DTPMP Salz. Diese wässrigen Lösungen wurden mit einem Büchi-Mini Spray Dryer B-290 sprühgetrocknet.

Bereits nach der Hälfte der Versuchszeit ziehen sich die auf pH 7 anneutralisierten Pulverproben sichtbar zu einem Block zusammen. Nach 22 Tagen ist pulverförmige Struktur der die DTPMP-Säure weiterhin erkennbar, die Probe des Na₇-Salzes ist verflüssigt.

Dies zeigt, dass bei gleichem, geringen Verunreinigungsgrad Feststoffe der DTPMP-Säure lagerstabil sind, während dies für die Natriumsalze der DTPMP nicht zutrifft.

## Patentansprüche

1. Kristallisat der reinen Säure DTPMP gemäß der allgemeinen Formel (**I**) oder eine tautomere Form davon: 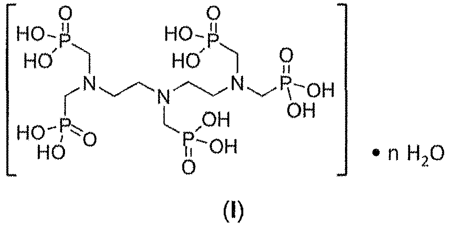 wobei n eine Zahl zwischen 0 und 2 ist,
**dadurch gekennzeichnet, dass** das Kristallisat zumindest eine Kristallmodifikation ausgewählt aus *α, β* und *γ* aufweist,
wobei die *α*-Kristallmodifikation **gekennzeichnet ist durch** folgende charakteristischen Reflexe im Röntgenbeugungsdiagramm, gemessen mit Cu-K_{α}-Strahlung:
| **2Θ** | **d** |
|---|---|
| 6,8 | 13,00 |
| 17,9 | 5,0 |
| 20,2 | 4,40 |
| 22,2 | 4,00 |
| 22,5 | 3,95 |
| 23,0 | 3,86 |
| 23,1 | 3,84 |
| 25,0 | 3,6 |
wobei die *β*-Kristallmodifikation **gekennzeichnet ist durch** folgende charakteristischen Reflexe im Röntgenbeugungsdiagramm, gemessen mit Cu-K*_{α}*-Strahlung:
| **2Θ** | **d** |
|---|---|
| 6,7 | 13,17 |
| 18,6 | 4,77 |
| 19,6 | 4,5 |
| 20,0 | 4,4 |
| 22,1 | 4,0 |
| 22,5 | 3,9 |
| 23,0 | 3,9 |
| 24,8 | 3,6 |
| 25,2 | 3,5 |
und wobei die *γ*-Kristallmodifikation **gekennzeichnet ist durch** folgende charakteristischen Reflexe im Röntgenbeugungsdiagramm, gemessen mit Cu-K*_{α}*-Strahlung:
| **2Θ** | **d** |
|---|---|
| 13,0 | 6,8 |
| 17,9 | 4,9 |
| 22,0 | 4,0 |
| 22,4 | 4,0 |
| 23,1 | 3,8 |
| 23,3 | 3,8 |
| 25,1 | 3,6 |
| 26,1 | 3,4 |

2. Verfahren zur Feststoffgewinnung kristalliner DTPMP als reine Säure der allgemeinen Formel (**I**) nach einem der vorgenannten Ansprüche aus einem wässrigen Rohprodukt, enthaltend DTPMP bei einem pH-Wert kleiner 4 mit den folgenden Schritten:
**a.** Einbringen von Impfkeimen, enthaltend DTPMP, in ein wässriges Rohprodukt, enthaltend DTPMP mit einem Gesamtanteil im Bereich von 10 bis 65 Ma.-%, bis zu einer Trübedichte zwischen 1 bis 25%,
**b.** Eintrag kinetischer Energie in das wässrige Rohprodukt, wobei ein Kristallisat, enthaltend DTPMP als reine Säure mit einem Gesamtgehalt von mindestens 75 Ma.-%, ausfällt,
**c.** Abtrennung des Kristallisates von dem wässrigen Rohprodukt durch Sedimentation und/oder Filtration.

3. Verfahren nach Anspruch 2, **dadurch gekennzeichnet, dass** das wässrige Rohprodukt Verunreinigungen in Form von Nebenprodukten und/oder nicht umgesetzten Edukten enthält.

4. Verfahren nach Anspruch 2 oder 3, **dadurch gekennzeichnet, dass** der Eintrag kinetischer Energie in Form von Rühren und/oder Schütteln und/oder Ultraschallbehandlung erfolgt.

5. Verfahren nach Anspruch 2 bis 4, **dadurch gekennzeichnet, dass** das wässrige Rohprodukt zur Feststoffgewinnung eine Temperatur im Bereich von 25 bis 85°C aufweist.

6. Verfahren nach einem der Ansprüche 2 bis 5, **dadurch gekennzeichnet, dass** ein abgetrenntes Kristallisat einen Trockensubstanzgehalt von mindestens 65% aufweist.

7. Verfahren nach einem der Ansprüche 2 bis 6, **dadurch gekennzeichnet, dass** das Verfahren mindestens eine isotherme Prozessetappe aufweist, in der die Temperaturdifferenz in dem wässrigen Rohprodukt über einen definierten Zeitraum des Eintrags kinetischer Energie konstant ist.

8. Verfahren nach Anspruch 7, **dadurch gekennzeichnet, dass** die Temperatur des wässrigen Rohprodukts zwischen dem definierten Zeitraum von zwei isothermen Prozessetappen mit einem Temperaturprofil von 1 bis 7 K pro Tag verringert wird.

9. Verfahren nach einem der Ansprüche 2 bis 8, **dadurch gekennzeichnet, dass** das Verfahren in einem quasikontinuierlichen Betrieb vollzogen wird.

10. Verfahren nach einem der Ansprüche 2 bis 6, **dadurch gekennzeichnet, dass** das wässrige Rohprodukt zur Feststoffgewinnung eine starke Säure im Bereich von 1 bis 4,5 Ma.-% aufweist.

11. Verwendung eines Verfahrens nach einem der Ansprüche 2 bis 10 zur Reinigung eines wasserhaltigen Rohproduktes, enthaltend DTPMP, mit einem Gesamtgehalt von mindestens 10 Ma.-%.

12. Verwendung eines Verfahrens nach einem der Ansprüche 2 bis 6 zur Herstellung eines Kristallisates der reinen Säure DTPMP gemäß der allgemeinen Formel (I) nach Anspruch 1.

## Claims

1. Crystallisate of the pure acid DTPMP according to general formula (I) or a tautomeric form thereof: 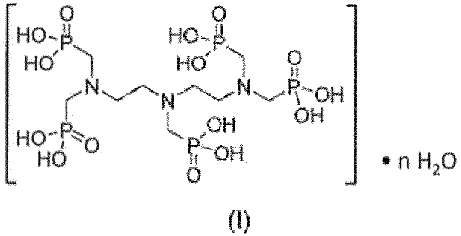 where n is a number between 0 and 2,
**characterised in that** the crystallisate has at least one crystal modification selected from *α, β* and *γ*,
where the *α* crystal modification is **characterised by** the following characteristic reflections in the X-ray diffraction diagram, measured using Cu-K_{α} radiation:
| **2Θ** | **d** |
|---|---|
| 6.8 | 13.00 |
| 17.9 | 5.0 |
| 20.2 | 4.40 |
| 22.2 | 4.00 |
| 22.5 | 3.95 |
| 23.0 | 3.86 |
| 23.1 | 3.84 |
| 25.0 | 3.6 |
where the *β* crystal modification is **characterised by** the following characteristic reflections in the X-ray diffraction diagram, measured using Cu-K*_{α}* radiation:
| **2Θ** | **d** |
|---|---|
| 6.7 | 13.17 |
| 18.6 | 4.77 |
| 19.6 | 4.5 |
| 20.0 | 4.4 |
| 22.1 | 4.0 |
| 22.5 | 3.9 |
| 23.0 | 3.9 |
| 24.8 | 3.6 |
| 25.2 | 3.5 |
and where the *γ* crystal modification is **characterised by** the following characteristic reflections in the X-ray diffraction diagram, measured using Cu-K*_{α}* radiation:
| **2Θ** | **d** |
|---|---|
| 13.0 | 6.8 |
| 17.9 | 4.9 |
| 22.0 | 4.0 |
| 22.4 | 4.0 |
| 23.1 | 3.8 |
| 23.3 | 3.8 |
| 25.1 | 3.6 |
| 26.1 | 3.4 |

2. Method for obtaining solid matter of crystalline DTPMP as a pure acid of general formula (I) according to the preceding claim from an aqueous raw product, containing DTPMP at a pH of less than 4, said method comprising the following steps:
a. placing seed crystals containing DTPMP into an aqueous raw product, containing DTPMP having an overall proportion in the range of from 10 to 65 ma.%, up to a slurry density between 1 to 25%,
b. introducing kinetic energy into the aqueous raw product, a crystallisate precipitating which contains DTPMP as a pure acid having an overall content of at least 75 ma.%,
c. separating the crystallisate from the aqueous raw product by means of sedimentation and/or filtration.

3. Method according to claim 2, **characterised in that** the aqueous raw product contains impurities in the form of by-products and/or unreacted starting products.

4. Method according to either claim 2 or claim 3, **characterised in that** the kinetic energy is introduced in the form of stirring and/or shaking and/or ultrasonic treatment.

5. Method according to claims 2 to 4, **characterised in that**, in order to obtain solid matter, the aqueous raw product has a temperature in the range of from 25 to 85°C.

6. Method according to any of claims 2 to 5, **characterised in that** a separated crystallisate has a solids content of at least 65%.

7. Method according to any of claims 2 to 6, **characterised in that** the method comprises at least one isothermal process stage, in which the temperature difference in the aqueous raw product is constant over a defined period of the introduction of kinetic energy.

8. Method according to claim 7, **characterised in that** the temperature of the aqueous raw product is reduced between the defined period of two isothermal process stages using a temperature profile of from 1 to 7 K per day.

9. Method according to any of claims 2 to 8, **characterised in that** the method is carried out in a virtually continuous operation.

10. Method according to any of claims 2 to 6, **characterised in that**, in order to obtain solid matter, the aqueous raw product has a strong acid in the range of from 1 to 4.5 ma.%.

11. Use of a method according to any of claims 2 to 10 for purifying a hydrous raw product, containing DTPMP, having an overall content of at least 10 ma.%.

12. Use of a method according to any of claims 2 to 6 for producing a crystallisate of the pure acid DTPMP in accordance with general formula (I) according to claim 1.

## Revendications

1. Produit de cristallisation de l'acide pur DTPMP selon la formule générale (I) ou une forme tautomérique de celui-ci : 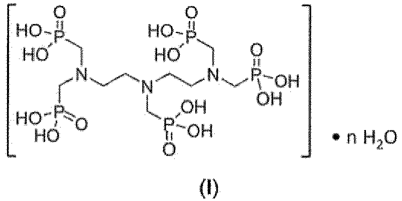 n étant un nombre compris entre 0 et 2,
**caractérisé en ce que** le produit de cristallisation présente au moins une modification cristalline sélectionnée parmi *α, β* et *γ*,
la modification cristalline α étant **caractérisée par** les reflets caractéristiques suivants dans le diagramme de diffraction aux rayons X, mesuré avec un rayonnement Cu-K_{α} :
| **2Θ** | **d** |
|---|---|
| 6,8 | 13,00 |
| 17,9 | 5,0 |
| 20,2 | 4,40 |
| 22,2 | 4,00 |
| 22,5 | 3,95 |
| 23,0 | 3,86 |
| 23,1 | 3,84 |
| 25,0 | 3,6 |
la modification cristalline *β* étant **caractérisée par** les reflets caractéristiques suivants dans le diagramme de diffraction aux rayons X, mesuré avec un rayonnement Cu-K*_{α}* :
| **2Θ** | **d** |
|---|---|
| 6,7 | 13,17 |
| 18,6 | 4,77 |
| 19,6 | 4,5 |
| 20,0 | 4,4 |
| 22,1 | 4,0 |
| 22,5 | 3,9 |
| 23,0 | 3,9 |
| 24,8 | 3,6 |
| 25,2 | 3,5 |
et la modification cristalline *γ* étant **caractérisée par** les reflets caractéristiques suivants dans le diagramme de diffraction aux rayons X, mesuré avec un rayonnement Cu-K*_{α}* :
| **2Θ** | **d** |
|---|---|
| 13,0 | 6,8 |
| 17,9 | 4,9 |
| 22,0 | 4,0 |
| 22,4 | 4,0 |
| 23,1 | 3,8 |
| 23,3 | 3,8 |
| 25,1 | 3,6 |
| 26,1 | 3,4 |

2. Procédé pour l'obtention de matière solide de DTPMP cristallin en tant qu'acide pur de formule générale (I) selon l'une des revendications précédentes à partir d'un produit brut aqueux contenant du DTPMP ayant une valeur de pH inférieure à 4, avec les étapes suivantes :
**a.** dépôt de germes d'ensemencement, contenant du DTPMP, dans un produit brut aqueux, contenant du DTPMP dans une proportion totale située dans la plage de 10 à 65 % en masse, jusqu'à une turbidité comprise entre 1 et 25 %,
**b.** introduction d'énergie cinétique dans le produit brut aqueux, un produit de cristallisation, contenant du DTPMP en tant qu'acide pur avec une teneur totale d'au moins 75 % en masse, précipitant,
**c.** séparation du produit de cristallisation et du produit brut aqueux par sédimentation et/ou filtration.

3. Procédé selon la revendication 2, **caractérisé en ce que** le produit brut aqueux contient des impuretés sous forme de sous-produits et/ou de produits de réaction non transformés.

4. Procédé selon la revendication 2 ou 3, **caractérisé en ce que** l'introduction d'énergie cinétique s'effectue sous forme d'agitation et/ou de brassage et/ou de traitement aux ultrasons.

5. Procédé selon les revendications 2 à 4, **caractérisé en ce que** le produit brut aqueux pour l'obtention de matière solide présente une température située dans la plage de 25 à 85 °C.

6. Procédé selon l'une des revendications 2 à 5, **caractérisé en ce qu'**un produit de cristallisation séparé présente une teneur en substances sèches d'au moins 65 %.

7. Procédé selon l'une des revendications 2 à 6, **caractérisé en ce que** le procédé présente au moins une étape de traitement isotherme lors de laquelle la différence de température est constante dans le produit brut aqueux pendant une durée définie de l'introduction d'énergie cinétique.

8. Procédé selon la revendication 7, **caractérisé en ce que** la température du produit brut aqueux est réduite entre la durée définie par deux étapes de traitement isotherme avec un profil de température de 1 à 7 K par jour.

9. Procédé selon l'une des revendications 2 à 8, **caractérisé en ce que** le procédé est réalisé lors d'un fonctionnement presque continu.

10. Procédé selon l'une des revendications 2 à 6, **caractérisé en ce que** le produit brut aqueux présente pour l'obtention de matière solide un acide fort dans la plage de 1 à 4,5 % en masse.

11. Utilisation d'un procédé selon l'une des revendications 2 à 10 pour le nettoyage d'un produit brut aqueux, contenant du DTPMP, avec une teneur totale d'au moins 10 % en masse.

12. Utilisation d'un procédé selon l'une des revendications 2 à 6 pour la fabrication d'un produit de cristallisation de l'acide pur DTPMP selon la formule générale (I) selon la revendication 1.
